(19) Europäisches Patentamt / European Patent Office / Office européen des brevets

(11) **EP 2 483 051 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(21) Anmeldenummer: **10747855.4**

(22) Anmeldetag: **31.08.2010**

(51) Int Cl.:
*B29C 47/40* *(2006.01)*      *B29B 7/48* *(2006.01)*
*B29C 47/64* *(2006.01)*

(86) Internationale Anmeldenummer:
**PCT/EP2010/062660**

(87) Internationale Veröffentlichungsnummer:
**WO 2011/039016 (07.04.2011 Gazette 2011/14)**

(54) **BEHANDLUNGSELEMENT ZUR BEHANDLUNG VON MATERIAL IN EINER MEHRWELLEN-SCHNECKENMASCHINE SOWIE MEHRWELLEN-SCHNECKENMASCHINE**

Mixing/Kneading element for treating material in a multiple screw machine and multiple screw machine

Élément de mélange pour traiter les matières dans une machine à vis multiples et la machine à vis multiples

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 EP 09012358**

(43) Veröffentlichungstag der Anmeldung:
**08.08.2012 Patentblatt 2012/32**

(73) Patentinhaber: **Coperion GmbH**
**70469 Stuttgart (DE)**

(72) Erfinder: **BURKHARDT, Ulrich**
**70372 Stuttgart (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A2- 0 715 882          EP-A2- 1 013 402**
**EP-A2- 1 093 905          WO-A1-95/33608**
**WO-A1-02/076707          WO-A1-2009/152973**
**WO-A1-2009/153003          DE-A1- 2 526 894**
**DE-B- 1 180 718**

**Beschreibung**

Die Erfindung betrifft ein Behandlungselement zur Behandlung von Material in einer Mehrwellen-Schneckenmaschine, insbesondere in einer Zweiwellen-Schneckenmaschine, gemäß dem Oberbegriff des Anspruchs 1. Ferner betrifft die Erfindung eine Mehrwellen-Schneckenmaschine, insbesondere eine Zweiwellen-Schneckenmaschine, gemäß dem Oberbegriff des Anspruchs 15.

Aus der DE 1 180 718 A ist eine Zweiwellen-Schneckenmaschine mit eingängigen Behandlungs- bzw. Schneckenelementen bekannt. Im Querschnitt setzt sich die Außenkontur der Schneckenelemente aus Kreisbögen zusammen. Die in Drehrichtung liegende aktive Flanke weist eine Außenkontur auf, die aus drei Kreisbögen zusammengesetzt ist, deren Mittelpunkte entweder auf dem Außenradius oder auf der Längsachse der Schneckenelemente liegen. Nachteilig ist, dass die Schneckenelemente nur eine geringe Flexibilität bei der Einstellung der auf das zu bearbeitende Material wirkenden Scher- und/oder Dehnströmungen ermöglicht.

Aus der WO 95/33608 A1 ist ein Behandlungselement für eine Mehrwellen-Schneckenmaschine bekannt, dessen Außenkontur durch vier Außenkontur-Abschnitte gebildet wird, die jeweils durch den Kernradius und den Außenradius begrenzt sind. Jeder dieser Außenkontur-Abschnitte weist eine zugehörige Evolute auf, die genau einen Punkt umfasst, der außerhalb der Längsachse und innerhalb des Außenradius liegt.

Aus der EP 1 093 905 A2 ist ein Schneckenelement für einen Doppelschneckenextruder bekannt, dessen Außenkontur zwei Außenkontur-Abschnitte aufweist, die jeweils durch den Kernradius und den Außenradius begrenzt werden. Jeder der Außenkontur-Abschnitte weist eine zugehörige Evolute mit genau einem Punkt auf, der außerhalb der Längsachse und innerhalb des Außenradius liegt.

Die WO 02/076 707 A1 offenbart ein Schneckenelement für einen Mehrschneckenextruder, dessen Außenkontur Außenkontur-Abschnitte umfasst, die von Kreisbogenabschnitten um den Mittelpunkt bzw. die Längsachse des Schneckelements begrenzt werden. Die Außenkontur-Abschnitte werden aus maximal zwei Kreisbogenabschnitten gebildet, so dass die zugehörige Evolute maximal zwei Punkte umfasst.

Aus der DE 25 26 894 A1 ist ein Schneckenelement für eine Mehrwellen-Schneckenmaschine bekannt, dessen Außenkontur zwei Außenkontur-Abschnitte umfasst, die jeweils durch den Kernradius und den Außenradius begrenzt sind. Die Außenkontur-Abschnitte weisen jeweils eine zugehörige Evolute mit zwei Punkten auf, die außerhalb der Längsachse und innerhalb des Außenradius liegen.

Aus der EP 1 013 402 A2 ist ein Behandlungselement für eine Mehrwellen-Schneckenmaschine bekannt, dessen Flanken jeweils einen Außenkontur-Abschnitt bilden. Die Flanken sind jeweils durch einen Kreisbogenabschnitt gebildet, dessen Mittelpunkt nicht innerhalb des Außenradius liegt.

Aus der EP 0 715 882 A2 ist ein selbstreinigender Mischer mit mehreren gleichsinnig rotierenden Wellen und daran angeordneten Behandlungselementen bekannt. Der Mischer eignet sich besonders zur Behandlung von feststoffhaltigem Mischgut.

Der Erfindung liegt die Aufgabe zugrunde, ein Behandlungselement der gattungsgemäßen Art derart weiterzubilden, dass eine hohe Flexibilität bei der Einstellung der auf das zu bearbeitende Material wirkenden Scher- und/oder Dehnströmungen gegeben ist.

Diese Aufgabe wird durch ein Behandlungselement mit den Merkmalen des Anspruchs 1 gelöst. Erfindungsgemäß wurde erkannt, dass die aus dem Stand der Technik bekannten Behandlungselemente bei gleichem Verhältnis von Außenradius zu Kernradius einen gleichen Schnittwinkel des aktiven Flankenbogens mit dem Kammbogen aufweisen. Der Innenradius der Gehäusebohrungen ist um das Radialspiel größer als der Außenradius der Behandlungselemente. Somit ergibt sich bei konstantem Verhältnis von Radialspiel zu Außenradius immer eine geometrisch ähnliche Form des Keils zwischen der Innenkontur des Gehäuses und dem aktiven Flankenbogen. Da die in dem Keil herrschenden Scher- und/oder Dehnströmungen im Wesentlichen von dessen geometrischer Form abhängig sind, können diese nur über den Schnittwinkel des aktiven Flankenbogens mit dem Kammbogen eingestellt werden. Da der Schnittwinkel lediglich vom Verhältnis Außenradius zu Innenradius abhängig ist, ist die Einstellung der Scher- und/oder Dehnströmungen über die Geometrie des Keils nur äußerst begrenzt möglich.

Demgegenüber weist das erfindungsgemäße Behandlungselement - im Querschnitt bzw. in Querschnittsprojektion betrachtet - mindestens einen Außenkontur-Abschnitt $A(\Delta\varphi_j)$ auf, dessen zugehörige Evolute $E_j$ eine Menge von n Punkten P(i) mit i = 1 bis n und n $\geq$ 3, insbesondere n $\geq$ 4 und insbesondere n $\geq$ 5 ist, wobei jeder der Punkte P(i) außerhalb der Längsachse M des Behandlungselements und innerhalb dessen Außenradius $R_a$ liegt. Jeweils zwei benachbarte Punkte P(i) und P(i+1) weisen voneinander einen Abstand $\Delta r(i)$ auf, der kleiner als $R_i/2$, insbesondere kleiner als $R_i/4$, insbesondere kleiner als $R_i/6$, und insbesondere kleiner als $R_i/8$ ist. Benachbarte Punkte P(i) und P(i+1) gehören zu benachbarten Evolventenbögen E'(i) und E'(i+1). Die Evolventenbögen E'(i) mit i = 1 bis n bilden gemeinsam den zu der Evolute $E_j$ gehörigen Außenkontur-Abschnitt $A(\Delta\varphi_j)$.

Der Index j charakterisiert die Anzahl der Evoluten. Der mindestens eine Außenkontur-Abschnitt $A(\Delta\varphi_j)$ bildet zumindest einen Teil einer Flanke des Behandlungselements, wobei der zugehörige Keil über die Art und Anordnung der Evolute $E_j$ flexibel einstellbar ist. Dementsprechend können die von dem Behandlungselement erzeugbaren Scher- und/oder Dehnströmungen über die Art und Anordnung der Evolute $E_j$ flexibel auf

das zu behandelnde Material angepasst werden.

Die Evolute $E_j$ des zugehörigen in einer Ebene verlaufenden Außenkontur-Abschnitts $A(\Delta\varphi_j)$ ist der Ort bzw. die Kurve der Krümmungsmittelpunkte bzw. der Mittelpunkte des Krümmungskreises. Der zu der Evolute $E_j$ gehörige Außenkontur-Abschnitt $A(\Delta\varphi_j)$ wird auch als Evolvente bezeichnet. Zur Konstruktion der Außenkontur wird ein fiktiver Stab mit der Länge des Achsabstandes a an der Evolute $E_j$ abgewickelt, wobei das erste Stabende den Außenkontur-Abschnitt $A_i(\Delta\varphi_{ji})$ des einen Behandlungselements und das zweite Stabende einen zugehörigen Außenkontur-Abschnitt $A_{i+1}(\Delta\varphi_{ji+1})$ des weiteren Behandlungselements definiert, die bei einem Einbau in eine Mehrwellen-Schneckenmaschine einander dicht kämmen.

Durch die Art, Anordnung und Anzahl der Evoluten $E_j$ ist ein hohes Maß an Freiheitsgraden für die Konstruktion des erfindungsgemäßen Behandlungselements gegeben, so dass die Außenkontur-Abschnitte $A(\Delta\varphi_j)$ in ihrer Krümmung, Länge und ihren Schnittwinkeln in großen Bereichen variierbar sind. Die Keile zwischen den Flanken und der Innenkontur des Gehäuses können somit äußerst flexibel gestaltet werden. Da die in diesen Keilen herrschenden Scher- und/oder Dehnströmungen die Qualität des zu bearbeitenden Materials wesentlich beeinflussen, kann durch das erfindungsgemäße Behandlungselement die Qualität optimiert und an vorgegebene Anforderungen angepasst werden. Der mindestens eine Außenkontur-Abschnitt $A(\Delta\varphi_j)$ bildet dabei insbesondere einen Teil der in der Drehrichtung liegenden aktiven Flanken.

Das Behandlungselement kann als Knetelement bzw. Knetscheibe ausgebildet sein und in Richtung der Längsachse M eine gleichbleibende Außenkontur aufweisen. Mehrere Knetelemente können mit unterschiedlichen Versatzwinkeln um die Längsachse M zu Knetblöcken zusammengesetzt sein. Die Knetblöcke können einteilig gefertigt sein oder aus einzelnen Knetelementen zusammengesetzt sein.

Weiterhin kann das Behandlungselement als Schneckenelement ausgebildet sein, dessen Außenkontur in Richtung der Längsachse M durch eine konstante und/oder stetige Funktion verschraubt ist. Die Verschraubung kann grundsätzlich in beiden Drehrichtungen um die Längsachse M erfolgen, so dass das Schneckenelement wahlweise eine Förder- oder Stauwirkung aufweist. In Abhängigkeit der Geometrie des Schneckenelementes ist die Außenkontur gegebenenfalls als Querschnittsprojektion zu verstehen.

Weiterhin kann das Behandlungselement als Übergangselement ausgebildet sein, das in Richtung der Längsachse M eine Anfangs-Außenkontur und eine End-Außenkontur aufweist, die unterschiedlich sind und sich in Richtung der Längsachse M nach einer stetigen Funktion derart ändern, dass die Anfangs-Außenkontur stetig in die End-Außenkontur übergeht.

Das erfindungsgemäße Behandlungselement ist mit zugehörigen weiteren Behandlungselementen in beliebigen dicht kämmenden Mehrwellen-Schneckenmaschinen einsetzbar, insbesondere in gleichsinnig oder gegensinnig drehantreibbaren Zweiwellen-Schneckenmaschinen. Die benachbarten, sich dicht kämmenden Behandlungselemente bilden dabei eine Behandlungselement-Gruppe, deren Behandlungselemente durch Abwickeln des fiktiven Stabes der Länge a an einer gemeinsamen Evolute $E_j$ bzw. mehreren gemeinsamen Evoluten $E_j$ konstruiert wurden.

Weitere vorteilhafte Ausgestaltungen des erfindungsgemäßen Behandlungselements ergeben sich aus den Ansprüchen 2 bis 14.

Der Erfindung liegt ferner die Aufgabe zugrunde, eine Mehrwellen-Schneckenmaschine der gattungsgemäßen Art derart weiterzubilden, dass eine hohe Flexibilität bei der Einstellung der auf das zu bearbeitende Material wirkenden Scher- und/oder Dehnströmungen gegeben ist.

Diese Aufgabe wird durch eine Mehrwellen-Schneckenmaschine mit den Merkmalen des Anspruchs 15 gelöst. Durch die mindestens zwei Behandlungselemente nach mindestens einem der Ansprüche 1 bis 14 können die Keile zwischen den Flanken und der Innenkontur des Gehäuses flexibel variiert werden, wodurch die ausgeübten Scher- und/oder Dehnströmungen optimal an das zu bearbeitende Material angepasst werden können. Die mindestens zwei Behandlungselemente sind derart ausgebildet und angeordnet, dass sich diese dicht kämmen und eine entsprechende Behandlungselement-Gruppe bilden. Dies wird dadurch erzielt, dass die Summe des Außenradius $R_a$ und des Kernradius $R_i$ im Wesentlichen dem Achsabstand a entspricht. Im Wesentlichen bedeutet, dass die in der Praxis übliche Achsabrückung b vernachlässigt wird. Wird die Achsabrückung b berücksichtigt, so entspricht die Summe des Außenradius $R_a$ und des Kernradius $R_i$ der Differenz des Achsabstandes a und der Achsabrückung b.

Die mindestens zwei Behandlungselemente der Behandlungselement-Gruppe wurden an mindestens einer gemeinsamen Evolute $E_j$ durch Abwickeln eines fiktiven Stabes mit der Länge des Achsabstandes a bzw. des Achsabstandes a abzüglich der Achsabrückung b konstruiert.

Je nach Art, Anordnung und Anzahl der Evoluten $E_j$ können die Behandlungselemente der Behandlungselement-Gruppe symmetrisch, beispielsweise achs- und/oder rotationssymmetrisch, oder unsymmetrisch und/oder kongruent oder nicht-kongruent sein. Darüber hinaus können die mindestens zwei Behandlungselemente entsprechend den Ausführungen zu Anspruch 1 weitergebildet sein. Weitere vorteilhafte Ausgestaltungen der erfindungsgemäßen Mehrwellen-Schneckenmaschine ergeben sich aus den Ansprüchen 16 bis 18.

Weitere Merkmale, Einzelheiten und Vorteile der Erfindung ergeben sich aus der nachfolgenden Beschreibung mehrere Ausführungsbeispiele anhand der Zeichnung. Es zeigen:

Fig. 1      eine schematische Darstellung einer als Zweiwellen-Extruder ausgebildeten Zweiwellen-Schneckenmaschine gemäß einem ersten Ausführungsbeispiel,

Fig. 2      einen horizontalen Teil-Längsschnitt durch die Zweiwellen-Schneckenmaschine in Fig. 1,

Fig. 3      einen vertikalen Querschnitt durch die Zweiwellen-Schneckenmaschine gemäß der Schnittlinie III-III in Fig. 1 mit zwei sich dicht kämmenden, als Knetelemente ausgebildeten Behandlungselementen in einer ersten Drehstellung,

Fig. 4      einen vertikalen Querschnitt durch die Zweiwellen-Schneckenmaschine gemäß der Schnittlinie III-III in Fig. 1 mit zwei sich dicht kämmenden, als Knetelemente ausgebildeten Behandlungselementen in einer zweiten Drehstellung,

Fig. 5      eine perspektivische Ansicht mehrerer Behandlungselemente entsprechend Fig. 3,

Fig. 6      ein Konstruktionsdiagramm zur Veranschaulichung eines ersten Konstruktionsschrittes der Behandlungselemente in Fig. 3,

Fig. 7      ein Konstruktionsdiagramm zur Veranschaulichung eines zweiten Konstruktionsschrittes der Behandlungselemente in Fig. 3,

Fig. 8      ein Konstruktionsdiagramm zur Veranschaulichung eines dritten Konstruktionsschrittes der Behandlungselemente in Fig. 3,

Fig. 9      eine perspektivische Ansicht mehrerer dicht kämmender, als Schneckenelemente ausgebildeter Behandlungselemente gemäß einem zweiten Ausführungsbeispiel,

Fig. 10      einen vertikalen Querschnitt entsprechend Fig. 3 mit Behandlungselementen gemäß einem dritten Ausführungsbeispiel,

Fig. 11      ein Konstruktionsdiagramm zur Veranschaulichung der Konstruktionsschritte der Behandlungselemente in Fig. 10,

Fig. 12      einen vertikalen Querschnitt entsprechend Fig. 3 mit Behandlungselementen gemäß einem vierten Ausführungsbeispiel,

Fig. 13      ein Konstruktionsdiagramm zur Veranschaulichung eines ersten Konstruktionsschrittes der Behandlungselemente in Fig. 12,

Fig. 14      ein Konstruktionsdiagramm zur Veranschaulichung eines zweiten Konstruktionsschrittes der Behandlungselemente in Fig. 12,

Fig. 15      ein Konstruktionsdiagramm zur Veranschaulichung eines dritten Konstruktionsschrittes der Behandlungselemente in Fig. 12,

Fig. 16      einen vertikalen Querschnitt entsprechend Fig. 3 mit Behandlungselementen gemäß einem fünften Ausführungsbeispiel,

Fig. 17      einen vertikalen Querschnitt entsprechend Fig. 3 mit Behandlungselementen gemäß einem sechsten Ausführungsbeispiel,

Fig. 18      einen vertikalen Querschnitt entsprechend Fig. 3 mit Behandlungselementen gemäß einem siebten Ausführungsbeispiel,

Fig. 19      einen vertikalen Querschnitt entsprechend Fig. 3 mit Behandlungselementen gemäß einem achten Ausführungsbeispiel,

Fig. 20      einen vertikalen Querschnitt entsprechend Fig. 3 mit Behandlungselementen gemäß einem neunten Ausführungsbeispiel,

Fig. 21      einen vertikalen Querschnitt entsprechend Fig. 3 mit Behandlungselementen gemäß einem zehnten Ausführungsbeispiel,

Fig. 22      einen vertikalen Querschnitt entsprechend Fig. 3 mit Behandlungselementen gemäß einem elften Ausführungsbeispiel,

Fig. 23      einen vertikalen Querschnitt entsprechend Fig. 3 mit Behandlungselementen gemäß einem zwölften Ausführungsbeispiel,

Fig. 24      einen vertikalen Querschnitt entsprechend Fig. 3 mit Behandlungselementen gemäß einem dreizehnten Ausführungsbeispiel,

Fig. 25      einen vertikalen Querschnitt entsprechend Fig. 3 mit Behandlungselementen gemäß einem vierzehnten Ausführungsbeispiel,

Fig. 26      einen vertikalen Querschnitt entsprechend Fig. 3 mit zweigängigen Behandlungselementen gemäß einem fünfzehnten Ausführungsbeispiel,

Fig. 27      ein Konstruktionsdiagramm zur Veranschaulichung der Konstruktionsschritte der Behandlungselemente in Fig. 26,

Fig. 28      einen vertikalen Querschnitt entsprechend Fig. 3 mit zweigängigen Behandlungselementen gemäß einem sechzehnten Ausführungsbeispiel,

Fig. 29     einen vertikalen Querschnitt entsprechend Fig. 3 mit zweigängigen Behandlungselementen gemäß einem siebzehnten Ausführungsbeispiel,

Fig. 30     einen vertikalen Querschnitt entsprechend Fig. 3 mit dreigängigen Behandlungselementen gemäß einem achtzehnten Ausführungsbeispiel,

Fig. 31     einen vertikalen Querschnitt entsprechend Fig. 3 mit eingängigen Behandlungselementen gemäß einem neunzehnten Ausführungsbeispiel,

Fig. 32     ein Konstruktionsdiagramm zur Veranschaulichung der Konstruktionsschritte der Behandlungselemente in Fig. 31,

Fig. 33     einen vertikalen Querschnitt entsprechend Fig. 3 mit eingängigen Behandlungselementen gemäß einem zwanzigsten Ausführungsbeispiel,

Fig. 34     ein Konstruktionsdiagramm zur Veranschaulichung der Konstruktionsschritte der Behandlungselemente in Fig. 33, und

Fig. 35     einen vertikalen Querschnitt entsprechend Fig. 28 mit exzentrisch angeordneten Behandlungselementen gemäß einem einundzwanzigsten Ausführungsbeispiel.

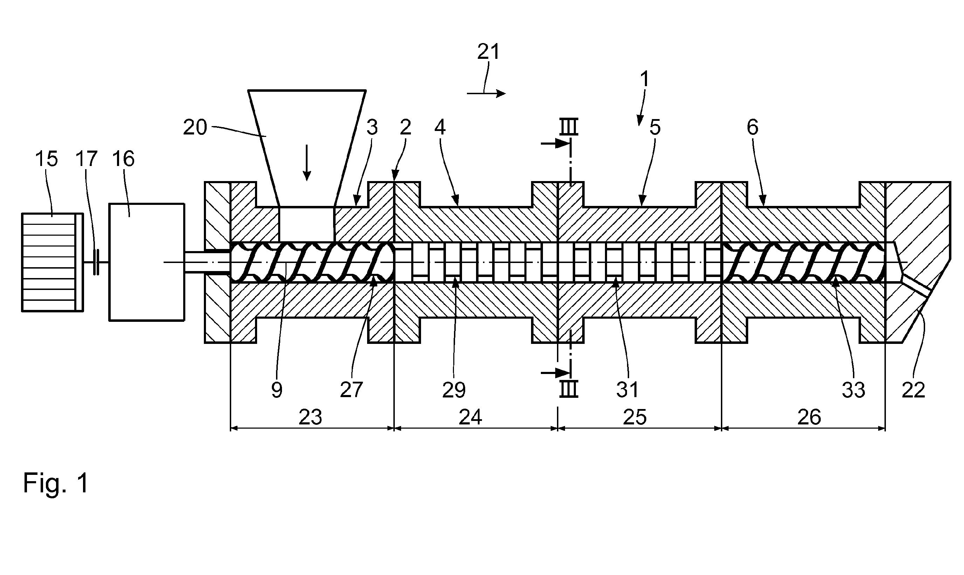

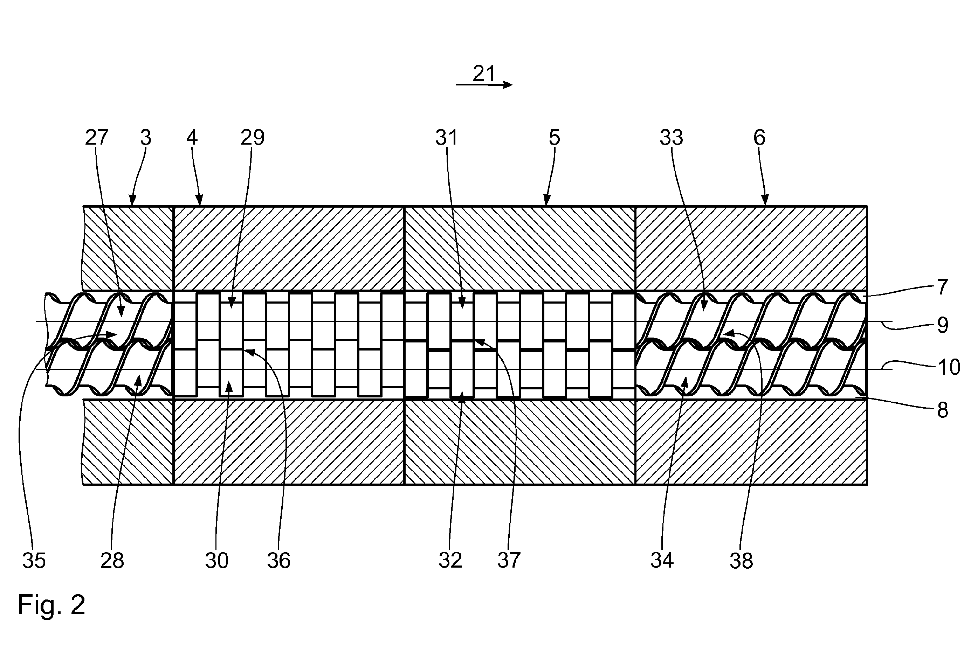

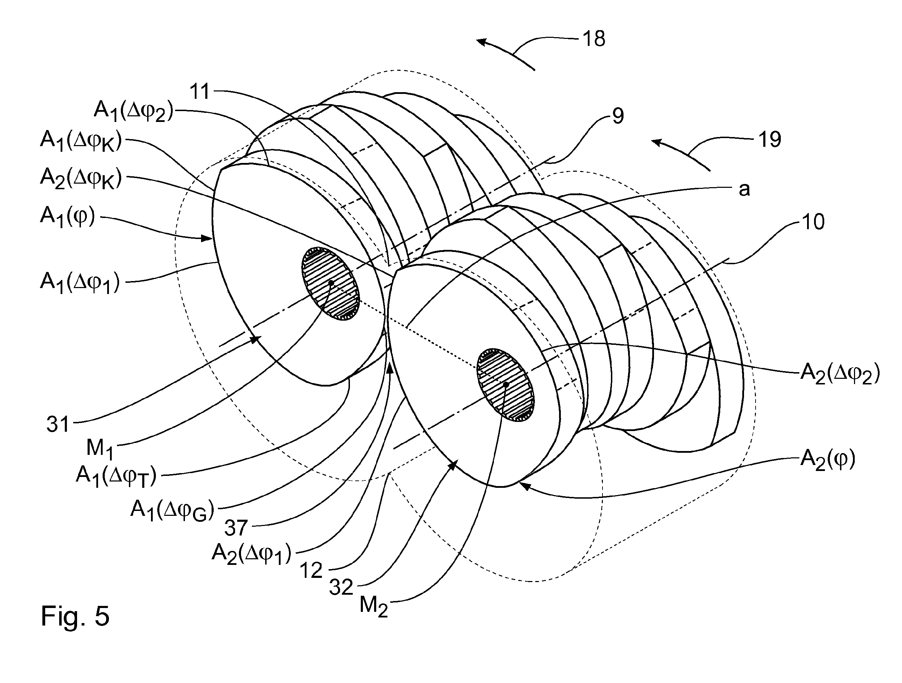

Nachfolgend wird unter Bezugnahme auf die Fig. 1 bis 8 ein erstes Ausführungsbeispiel der Erfindung beschrieben. Eine als Zweiwellen-Extruder ausgebildete Zweiwellen-Schneckenmaschine 1 weist ein Gehäuse 2 aus mehreren hintereinander angeordneten und als Gehäuseschüssen bezeichneten Gehäuseabschnitten 3, 4, 5, 6 auf. Im Gehäuse 2 ist eine erste Gehäusebohrung 7 und eine diese durchdringende zweite Gehäusebohrung 8 ausgebildet, deren zugehörige Achsen 9, 10 parallel zueinander verlaufen. Im Durchdringungsbereich der Gehäusebohrungen 7, 8 weisen die Gehäuseabschnitte 3 bis 6 einen oberen ersten Zwickel 11 und einen entsprechend ausgebildeten unteren zweiten Zwickel 12 auf.

In den Gehäusebohrungen 7, 8 sind konzentrisch zu der jeweils zugehörigen Achse 9, 10 Wellen 13, 14 angeordnet, die von einem Antriebsmotor 15 drehantreibbar sind. Zwischen den Wellen 13, 14 und dem Antriebsmotor 15 ist ein Verzweigungsgetriebe 16 angeordnet, wobei wiederum zwischen dem Antriebsmotor 15 und dem Verzweigungsgetriebe 16 eine Kupplung 17 angeordnet ist. Die Wellen 13, 14 werden gleichsinnig, also in gleichen Drehrichtungen 18, 19 um die Achsen 9, 10 angetrieben. Die Achsen 9, 10 werden dementsprechend nachfolgend auch als Drehachsen bezeichnet.

Auf dem dem Verzweigungsgetriebe 16 benachbarten ersten Gehäuseabschnitt 3 ist eine Materialzuführung 20 in Form eines Trichters angeordnet, durch den aufzubereitendes bzw. zu bearbeitendes Kunststoffmaterial in die Gehäusebohrungen 7, 8 eingegeben werden kann. Das Material wird in einer Förderrichtung 21 von dem ersten Gehäuseabschnitt 3 bis zu dem letzten Gehäuseabschnitt 6 durch das Gehäuse 2 gefördert und verlässt die Schneckenmaschine 1 beispielsweise durch eine das Gehäuse 2 abschließende Düsenplatte 22.

Die Schneckenmaschine 1 weist in Förderrichtung 21 hintereinander eine Einzugszone 23, eine Aufschmelzzone 24, eine Mischzone 25 und eine Druckaufbauzone 26 auf. Auf den als Zahnwellen ausgebildeten Wellen 13, 14 sind - in Förderrichtung 21 hintereinander - jeweils einander paarweise zugeordnete erste Schneckenelemente 27, 28, erste Knetelemente 29, 30, zweite Knetelemente 31, 32 und zweite Schneckenelemente 33, 34 jeweils als Behandlungselemente angeordnet. Sowohl die Schneckenelemente 27, 28, 33, 34 als auch die Knetelemente 29, 30, 31, 32 greifen ineinander, sind also dicht kämmend ausgebildet. Die paarweise nebeneinander angeordneten Schneckenelemente 27, 28 bilden jeweils eine erste Behandlungselement-Gruppe 35 aus. Entsprechend bilden die Knetelemente 29, 30 bzw. 31, 32 und die Schneckenelemente 33, 34 jeweils paarweise weitere Behandlungselement-Gruppen 36, 37 und 38 aus.

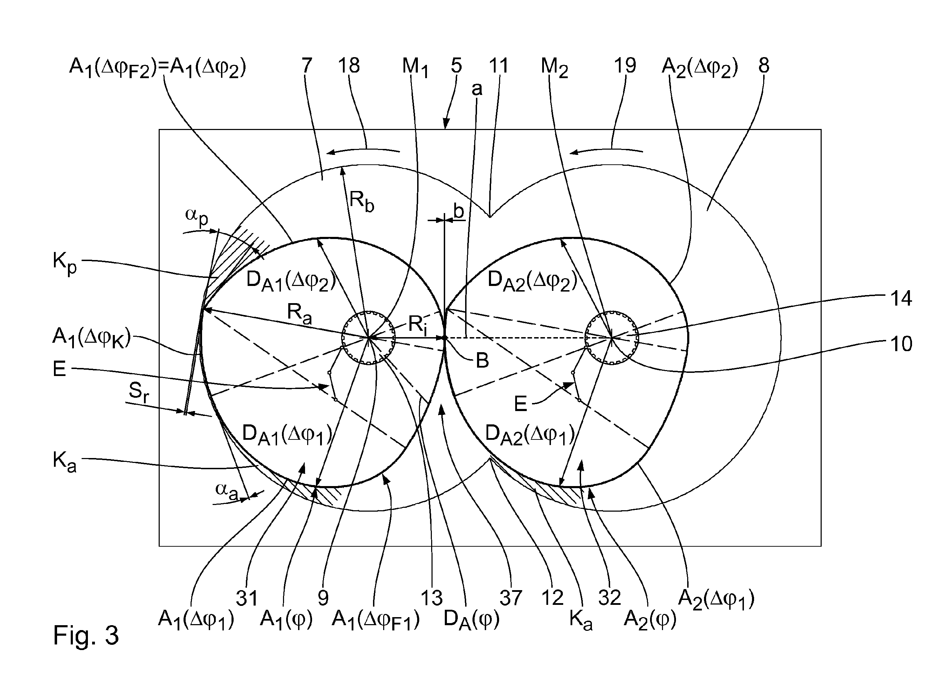

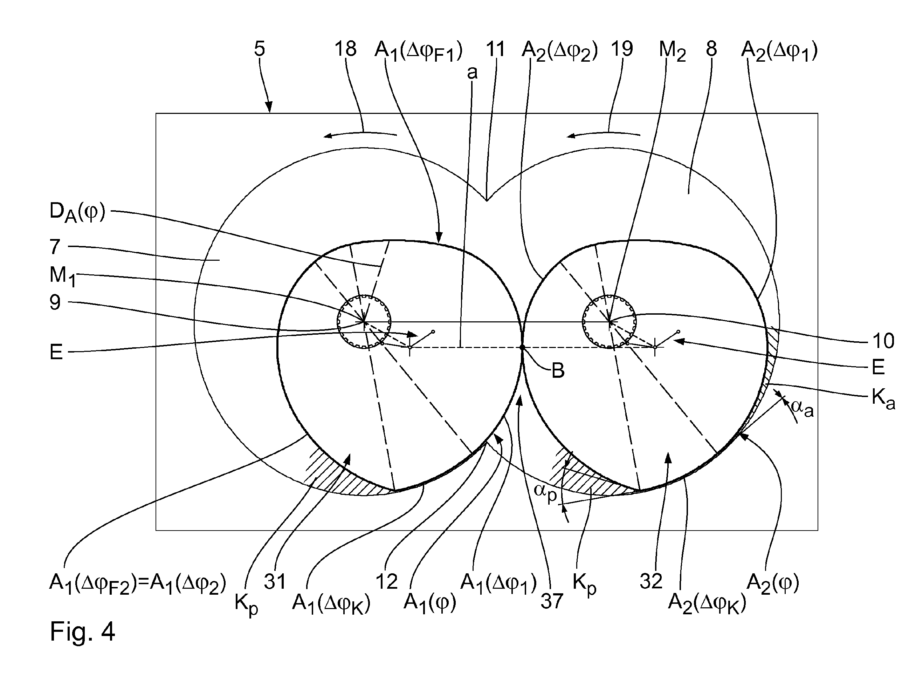

Nachfolgend wird anhand der Fig. 3 bis 8 eine aus den Knetelementen 31, 32 bestehende Behandlungselement-Gruppe 37 im Detail beschrieben. In den Fig. 3 und 4 ist aus Gründen der Übersichtlichkeit lediglich eine Behandlungselement-Gruppe 37 dargestellt. Die Knetelemente 31, 32 nachfolgender Behandlungselement-Gruppen 37 weisen beispielsweise einen Versatzwinkel um die jeweilige Längsachse M von 30° auf. Die Knetelemente 31, 32 sind eingängig ausgebildet und kongruent zueinander. Dies bedeutet, dass die Knetelemente 31, 32 durch Verschiebung und/oder Drehung um ihre jeweilige Längsachse $M_1$ bzw. $M_2$ zur Deckung gebracht werden können. Die Längsachsen $M_1$ und $M_2$ sind konzentrisch zu den zugehörigen Drehachsen 9, 10 der Wellen 13, 14. In einer senkrecht zu den Längsachsen $M_1$, $M_2$ verlaufenden Querschnittsebene weisen die Knetelemente 31, 32 jeweils eine um die zugehörige Längsachse $M_1$, $M_2$ verlaufende Außenkontur $A_1(\varphi)$, $A_2(\varphi)$ auf, wobei $\varphi$ der Winkel um die jeweilige Längsachse $M_1$, $M_2$ ist und zwischen $0 \leq \varphi \leq 360°$ liegt. Da die Knetelemente 31, 32 kongruent zueinander sind, sind deren Außenkonturen $A_1(\varphi)$ und $A(\varphi)$ identisch. Sofern es nachfolgend auf eine Unterscheidung der Außenkonturen $A_1(\varphi)$ und $A_2(\varphi)$ sowie der Längsachsen $M_1$ und $M_2$ nicht ankommt, werden diese gemeinsam mit $A(\varphi)$ bzw. M bezeichnet.

Die Außenkonturen $A(\varphi)$ weisen relativ zu ihrer jeweiligen Längsachse M, die als Mittelpunkte dienen, einen minimalen Kernradius $R_i$ und einen maximalen Außenradius $R_a$ auf. Der Außenradius $R_a$ ist um ein Radialspiel $S_r$ kleiner als der Innenradius $R_b$ der Gehäusebohrungen 7, 8. Da die Knetelemente 31, 32 dicht kämmend ausgebildet sind, ist die Summe des Kernradius $R_i$ und des Außenradius $R_a$ im Wesentlichen gleich dem Achsabstand a der Drehachsen 9, 10. Im Wesentlichen bedeutet, dass eine geringfügige Achsabrückung b vernachlässigt wird. Wird diese berücksichtigt, so ist die Summe des Kernradius $R_i$ und des Außenradius $R_a$ gleich der Differenz des Achsabstandes a und der Achsabrückung b. Im Folgenden wird die Achsabrückung b vernachlässigt.

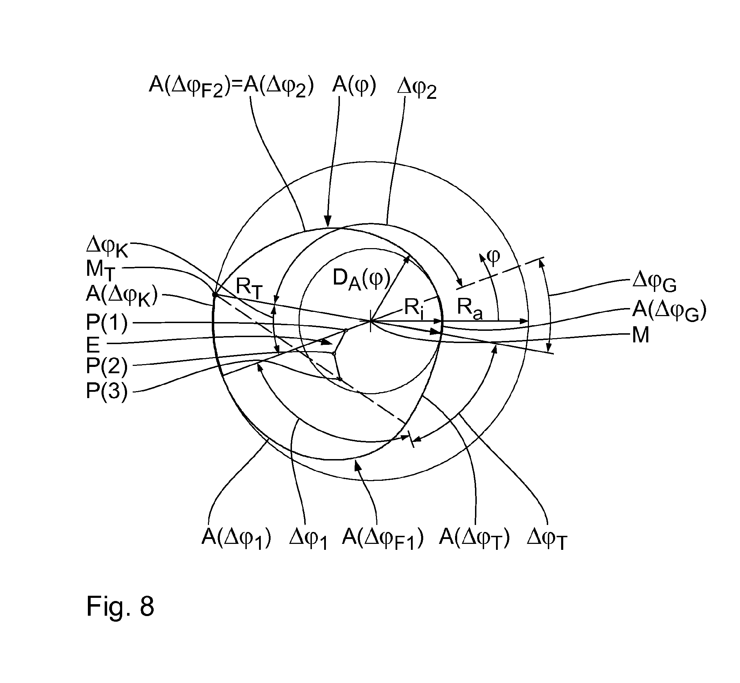

Nachfolgend wird die Konstruktion der Außenkonturen $A(\varphi)$ und deren Verlauf im Detail beschrieben. Die Außenkonturen $A(\varphi)$ weisen von ihrer Längsachse M jeweils einen Abstand $D_A(\varphi)$ auf, für den jeweils gilt: $R_i \leq D_A(\varphi) \leq R_a$. Die Außenkonturen $A(\varphi)$ weisen einen Kamm $A(\Delta\varphi_K)$, einen Grund $A(\Delta\varphi_G)$ und zwei Flanken $A(\Delta\varphi_{F1})$ und $A(\Delta\varphi_{F2})$ auf. Die Winkelabschnitte $\Delta\varphi_K$, $\Delta\varphi_G$ und $\Delta\varphi_F$ werden als Kammwinkel, Grundwinkel und Flankenwinkel bezeichnet. Dies ist in Fig. 8 veranschaulicht.

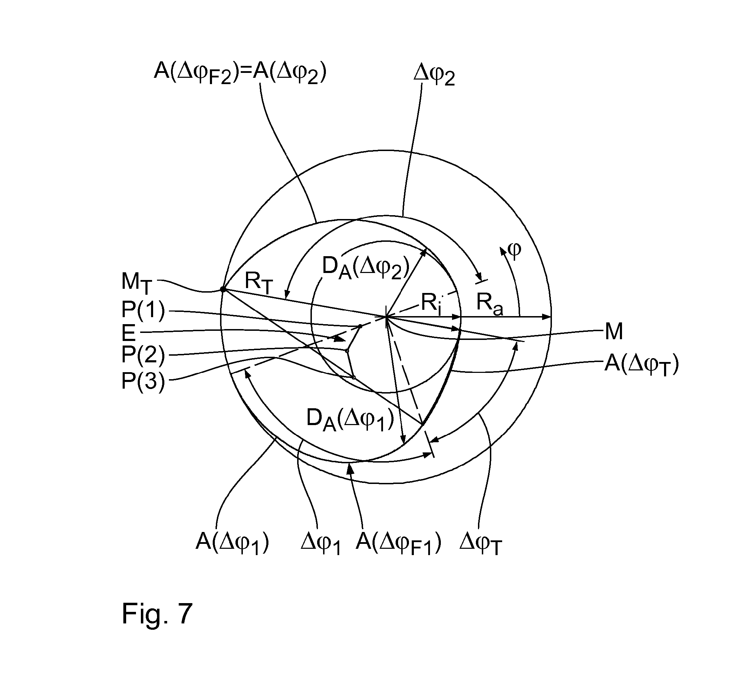

Die erste Flanke $A(\Delta\varphi_{F1})$ setzt sich zusammen aus einem ersten Außenkontur-Abschnitt $A(\Delta\varphi_1)$ mit einem Winkelabschnitt $\Delta\varphi_1$ und einem Übergangs-Abschnitt $A(\Delta\varphi_T)$ mit einem Übergangswinkel $\Delta\varphi_T$ und bildet eine in der jeweiligen Drehrichtung 18, 19 aktive Flanke des Knetelements 31, 32. Die zweite Flanke $A(\Delta\varphi_{F2})$ entspricht einem zweiten Außenkontur-Abschnitt $A(\Delta\varphi_2)$ mit einem Winkelabschnitt $\Delta\varphi_2$ und bildet eine entgegen der jeweiligen Drehrichtung 18, 19 liegende passive Flanke des Knetelements 31, 32. Die Außenkontur-Abschnitte $A(\Delta\varphi_1)$ und $A(\Delta\varphi_2)$ weisen von der jeweiligen Längsachse M einen sich stetig ändernden Abstand $D_A(\Delta\varphi_1)$ und $D_A(\Delta\varphi_2)$ auf, für die jeweils $R_i < D_A(\Delta\varphi) < R_a$ ist. Dies ist in Fig. 7 veranschaulicht.

Die Außenkontur-Abschnitte $A(\Delta\varphi_1)$ und $A(\Delta\varphi_2)$ weisen eine zugehörige Evolute E auf, die eine Menge von drei Punkten P(i) mit i = 1 bis 3 ist. Die Punkte P(i) liegen außerhalb der jeweiligen Längsachse M und innerhalb des Außenradius $R_a$.

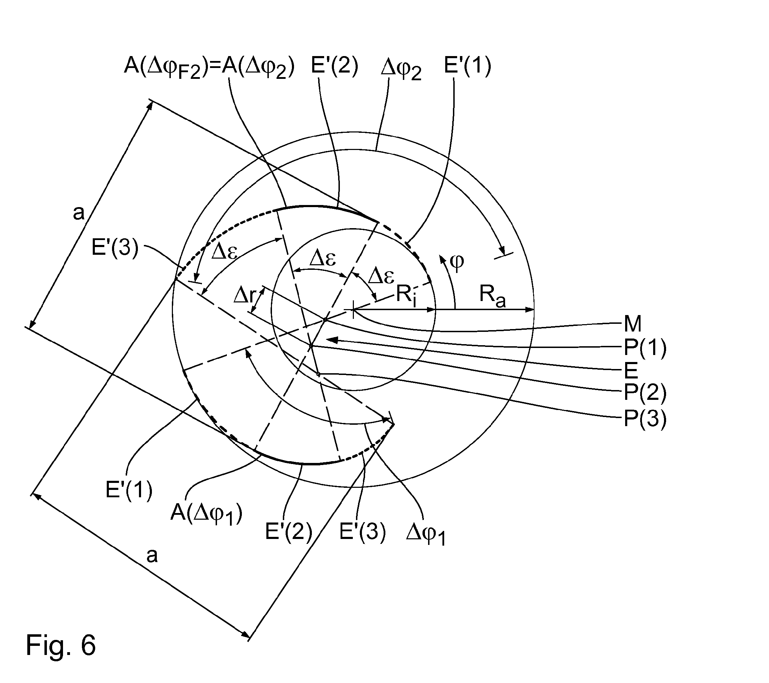

Die Konstruktion der Außenkontur-Abschnitte $A(\Delta\varphi_1)$ und $A(\Delta\varphi_2)$ ist in Fig. 6 veranschaulicht. Bildlich gesprochen wird zu deren Konstruktion ein fiktiver Stab mit der Länge des Achsabstandes a an der Evolute E abgewickelt, wobei das erste Stabende den ersten Außenkontur-Abschnitt $A(\Delta\varphi_1)$ des einen Knetelements 31 und das zweite Stabende den zweiten Außenkontur-Abschnitt $A(\Delta\varphi_2)$ des anderen Knetelements 32 definiert und umgekehrt. Anders ausgedrückt wird der fiktive Stab an einem durch die Punkte P(1) bis P(3) gebildeten Polygonzug abgerollt, wobei zu Beginn die Stabenden auf dem Kernradius $R_i$ bzw. dem Außenradius $R_a$ liegen. Das Abrollen wird beendet, wenn das ursprünglich auf dem Kernradius $R_i$ liegende Stabende auf den Außenradius $R_a$ trifft. Unter Abrollen ist zu verstehen, dass der fiktive Stab um den Punkt P(1) gedreht wird, bis der Stab auf den nächsten Punkt des Polygonzuges, also auf P(2) trifft. Anschließend wird der fiktive Stab um den Punkt P(2) gedreht, bis der Stab auf den nächsten Punkt, also P(3) trifft. Daraufhin wird der fiktive Stab um den Punkt P(3) gedreht, bis das Stabende auf den Außenradius $R_a$ trifft. Dieses Abrollen ist in Fig. 6 veranschaulicht, wobei der fiktive Stab in einzelnen Stellungen während des Abwickelns gestrichelt dargestellt ist.

Die Außenkontur-Abschnitte $A(\Delta\varphi_1)$ und $A(\Delta\varphi_2)$ sind somit durch drei Kreisbögen gebildet, deren zugehörige Mittelpunkte die Punkte P(1) bis P(3) sind. Benachbarte Punkte der Punkte P(1) bis P(3) weisen einen konstanten Abstand $\Delta r(i) = \Delta r$ voneinander auf. Das bedeutet, dass die Radien von benachbarten Kreisbögen, die auch als Evolventenbögen E'(1) bis E'(3) bezeichnet werden, sich um den Abstand $\Delta r(i) = \Delta r$ unterscheiden. Der Abstand $\Delta r$ ist kleiner als $R_i$ und kleiner als $R_i/2$. Insbesondere kann der Abstand $\Delta r$ auch kleiner als $R_i/4$, insbesondere kleiner als $R_i/6$ und insbesondere kleiner als $R_i/8$ sein. Die zu den Punkten P(1) bis P(3) gehörigen Kreisbögen weisen konstante Zentriwinkel $\Delta\varepsilon(i) = \Delta\varepsilon$ auf. Die Zentriwinkel $\Delta\varepsilon(i) = \Delta\varepsilon$ sind kleiner als 60°. Insbesondere kann der Zentriwinkel $\Delta\varepsilon$ auch kleiner als 45° und insbesondere kleiner als 30° sein.

Aufgrund der konstanten Abstände $\Delta r$ und der konstanten Zentriwinkel $\Delta\varepsilon$ liegen die Punkte P(1) bis P(3) auf einer stetigen und differenzierbaren Kurve in Form eines Kreises, der eine gleichbleibende Krümmungsrichtung aufweist.

Fig. 7 veranschaulicht die weitere Konstruktion des ersten Flankenabschnitts $A(\Delta\varphi_{F1})$. Der erste Flanken-Abschnitt $A(\Delta\varphi_{F1})$ setzt sich zusammen aus dem ersten Außenkontur-Abschnitt $A(\Delta\varphi_1)$ und dem Übergangs-Abschnitt $A(\Delta\varphi_T)$ mit dem Übergangswinkel $\Delta\varphi_T$. Der Übergangs-Abschnitt $A(\Delta\varphi_T)$ ist ein Kreisbogen um den Mittelpunkt $M_T$ mit dem Übergangsradius $R_T$. Der Mittelpunkt $M_T$ ergibt sich aus dem Berührungspunkt des Außenradius $R_a$ und des zweiten Außenkontur-Abschnitts

$A(\Delta\varphi_2)$. Der Übergangsradius $R_T$ entspricht dem Achsabstand a. Bildlich gesprochen wird der fiktive Stab mit der Länge des Achsabstandes a - nachdem das Stabende auf dem Außenradius $R_a$ trifft - um diesen Berührungspunkt, also um den Mittelpunkt $M_T$, verschwenkt, bis der Stab die Längsachse M kreuzt. Das bewegliche Stabende kommt dann auf dem Kernradius $R_i$ zu liegen.

Fig. 8 veranschaulicht die Konstruktion des Kamms $A(\Delta\varphi_K)$ und des Grunds $A(\Delta\varphi_G)$. Der Kamm $A(\Delta\varphi_K)$ ist ein Kreisbogen mit der Längsachse M als Mittelpunkt und einem Radius, der dem Außenradius $R_a$ entspricht. Der Grund $A(\Delta\varphi_G)$ ist ebenfalls ein Kreisbogen mit der Längsachse M als Mittelpunkt und einem Radius, der dem Kernradius $R_i$ entspricht. Bildlich gesprochen wird der fiktive Stab, nachdem dieser auf die Längsachse M getroffen ist, um diese gedreht, bis die Stabenden wieder auf ihre Ausgangspunkte treffen. Der Kammwinkel

$\Delta\varphi_K$ entspricht somit dem Grundwinkel $\Delta\varphi_G$.

Da die Stabenden jeweils eine der Außenkonturen $A_1(\varphi)$ bzw. $A_2(\varphi)$ definieren, muss der beschriebene Vorgang nochmals wiederholt werden, um für jedes der Knetelemente 31, 32 die vollständige Außenkontur $A_1(\varphi)$ bzw. $A_2(\varphi)$ zu definieren. Aufgrund der Tatsache, dass die Außenkontur-Abschnitte $A(\Delta\varphi_1)$ und $A(\Delta\varphi_2)$ an einer gemeinsamen Evolute E gebildet werden bzw. eine gemeinsame Evolute E aufweisen, sind die aus dem Konstruktionsvorgang resultierenden Außenkonturen $A_1(\varphi)$ und $A_2(\varphi)$ kongruent. Das bedeutet, dass der oben beschriebene Konstruktionsvorgang für diesen Spezialfall nicht wiederholt werden muss, da mit diesem bereits beide Knetelemente 31, 32 konstruiert sind.

Die Außenkontur-Abschnitte $A(\Delta\varphi_1)$ und $A(\Delta\varphi_2)$ sind über ihre jeweiligen Winkelabschnitte $\Delta\varphi_1$ und $\Delta\varphi_2$ gekrümmt ausgebildet und weisen keine geradlinigen Teilabschnitte auf. Darüber hinaus weisen die Außenkonturen $A_1(\varphi)$ bzw. $A_2(\varphi)$ eine einheitliche Krümmungsrichtung auf.

Wie aus den Fig. 3 und 4 ersichtlich ist, können die zu den Knetelementen 31, 32 zugehörigen und gleichen Evoluten E durch eine lineare Verschiebung um den Achsabstand a in Richtung dieses ineinander überführt werden. Die Summe der Abstände der Evoluten E bzw. der Kurven, auf denen die Punkte P(i) der Evoluten E liegen, vom Berührungspunkt B ist in Richtung des Achsabstandes a in jeder Drehstellung im Wesentlichen gleich dem Achsabstand a, wodurch die Knetelemente 31, 32 dicht kämmend sind.

Der Keil $K_a$ zwischen der Innenkontur der Gehäusebohrungen 7, 8 und der aktiven Flanke $A(\Delta\varphi_{F1})$ und der entsprechende Keil Kp zwischen der Innenkontur und der passiven Flanke $A(\Delta\varphi_{F2})$ sind bei den erfindungsgemäßen Knetelementen 31, 32 flexibel einstellbar, wodurch die Scher- und/oder Dehnströmungen optimal auf das zu bearbeitende Kunststoffmaterial anpassbar sind. Der aktive Schnittwinkel $\alpha_a$ des Kamms $A(\Delta\varphi_K)$ und der aktiven Flanke $A(\Delta\varphi_{F1})$ beträgt 0°. Der passive Schnittwinkel $\alpha_p$ des Kamms $A(\Delta\varphi_K)$ und der passiven Flanke $A(\Delta\varphi_{F2})$ ist größer 0°.

Dadurch, dass der Abstand der Evoluten E der Knetelemente 31, 32 in jeder Drehstellung dem Achsabstand a entspricht, sind die Knetelemente 31, 32 dicht kämmend und weisen in ihrem jeweiligen Berührungspunkt B eine gemeinsame Tangente auf.

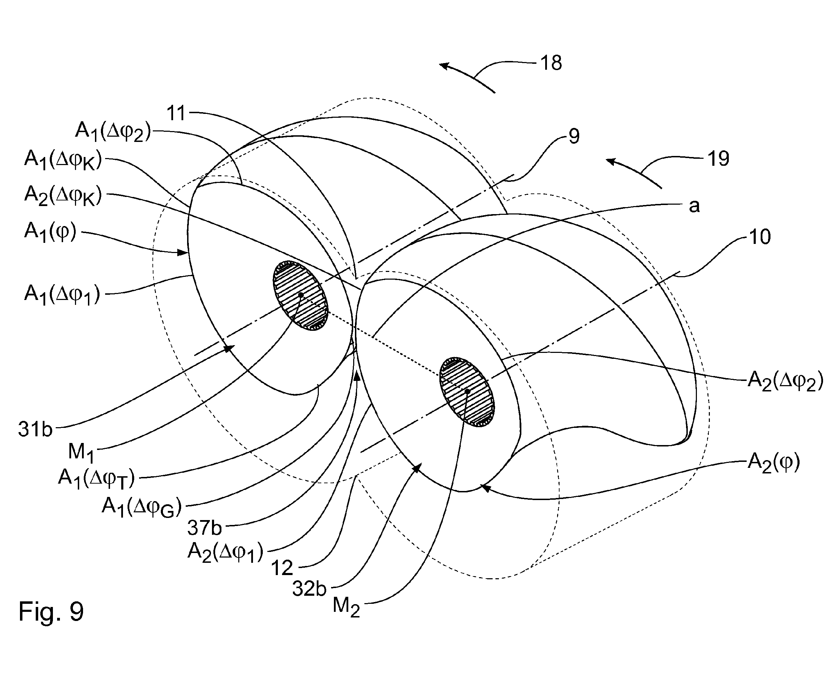

Nachfolgend wird unter Bezugnahme auf Fig. 9 ein zweites Ausführungsbeispiel der Erfindung beschrieben. Im Unterschied zu dem vorangegangenen Ausführungsbeispiel sind die Behandlungselemente 31a, 32a als Schneckenelemente ausgebildet. Die Außenkonturen $A_1(\varphi)$ und $A_2(\varphi)$ entsprechen dem ersten Ausführungsbeispiel, wobei diese längs der jeweiligen Drehachse 9, 10 mit einer konstanten und stetigen Funktion verschraubt sind. Hinsichtlich der weiteren Funktionsweise wird auf das erste Ausführungsbeispiel verwiesen.

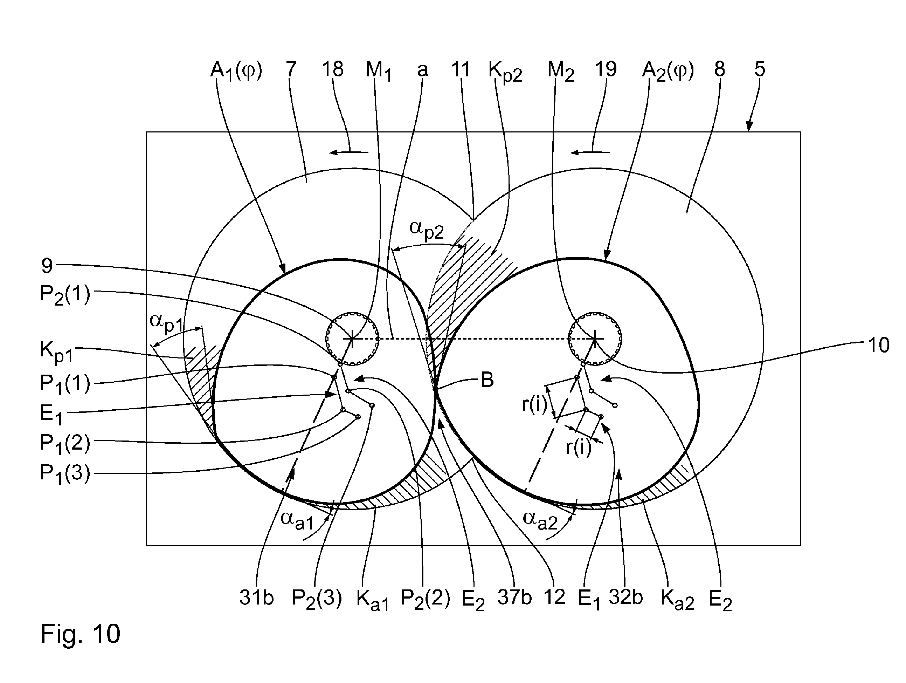

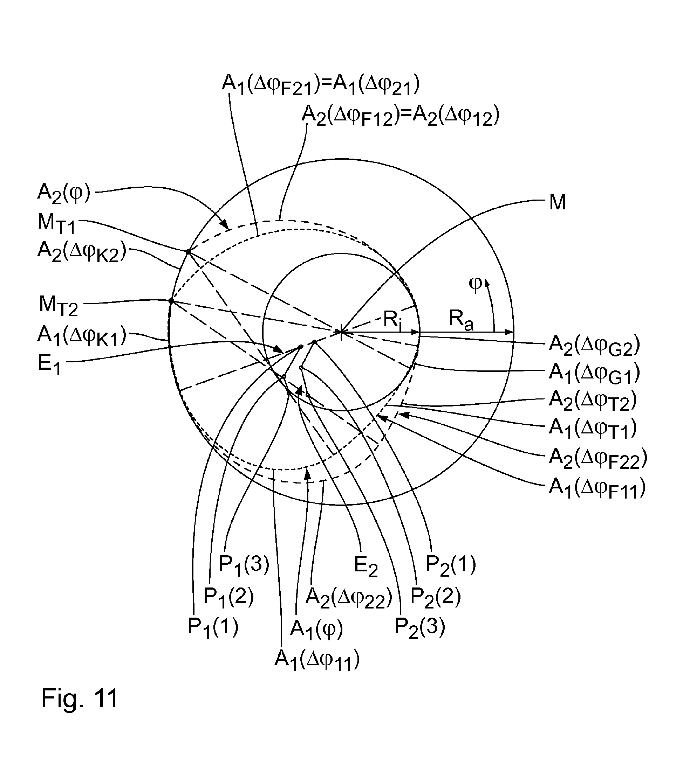

Nachfolgend wird unter Bezugnahme auf die Fig. 10 und 11 ein drittes Ausführungsbeispiel der Erfindung beschrieben. Die Knetelemente 31b und 32b sind weder kongruent zueinander noch symmetrisch. Die Knetelemente 31b, 32b weisen jeweils zwei Evoluten $E_j$ mit j = 1 und 2 auf. Jede der Evoluten $E_j$ ist eine Menge von 3 Punkten $P_j(i)$ mit i = 1 bis 3. Die erste Evolute $E_1$ ist ein aus den Punkten $P_1(1)$ bis $P_1(3)$ gebildeter Polygonzug, wobei benachbarte Punkte der Punke $P_1(1)$ bis $P_1(3)$ unterschiedliche Abstände $\Delta r(i)$ aufweisen. Die zweite Evolute $E_2$ entspricht der des ersten Ausführungsbeispiels. Die Außenkontur-Abschnitte $A_1(\Delta\varphi_{11})$ und $A_2(\Delta\varphi_2)$ werden durch Abwickeln des fiktiven Stabes an der ersten Evolute $E_1$ gebildet. Anschließend wird entsprechend dem ersten Ausführungsbeispiel der Übergangs-Abschnitt $A_1(\Delta\varphi_{T1})$ durch Verschwenken des fiktiven Stabes um den Mittelpunkt $M_{T1}$ gebildet. Daraufhin werden durch Drehen des fiktiven Stabes um den Mittelpunkt M der Kamm $A_2(\Delta\varphi_{K2})$ und der Grund $A_1(\Delta\varphi_{G1})$ entsprechend dem ersten Ausführungsbeispiel gebildet.

Nun folgt eine weitere halbe Umdrehung des fiktiven Stabes. Der fiktive Stab wird zunächst an der zweiten Evolute $E_2$ abgewickelt, wodurch die Außenkontur-Abschnitte $A_1(\Delta\varphi_{21})$ und $A_2(\Delta\varphi_{22})$ gebildet werden. Anschließend wird durch Verschwenken des fiktiven Stabes um den Mittelpunkt $M_{T2}$ der Übergangs-Abschnitt $A_2(\Delta\varphi_{T2})$ analog zu dem ersten Ausführungsbeispiel gebildet. Durch Drehen des fiktiven Stabes um den Mittelpunkt M werden der Grund $A_2(\Delta\varphi_{G2})$ und der Kamm $A_1(\Delta\varphi_{K1})$ gebildet und die Außenkonturen $A_1(\varphi)$ und $A_2(\varphi)$ geschlossen. Die Außenkontur-Abschnitte $A_1(\Delta\varphi_{11})$ und $A_2(\Delta\varphi_{12})$ werden somit an der Evolute $E_1$ erzeugt, wohingegen die Außenkontur-Abschnitte $A_1(\Delta\varphi_{21})$ und $A_2(\Delta\varphi_{22})$ an der davon unterschiedlichen Evolute $E_2$ erzeugt werden. Entsprechend sind auch die Keile $K_{a1}$ und $K_{a2}$ bzw. die Keile $K_{p1}$ und $K_{p2}$ und die Schnittwinkel $\alpha_{a1}$ und $\alpha_{a2}$ bzw. die Schnittwinkel $\alpha_{p1}$ und $\alpha_{p2}$ unterschiedlich ausgebildet. Hinsichtlich der weiteren Funktionsweise und Konstruktion wird auf die vorangegangenen Ausführungsbeispiele verwiesen.

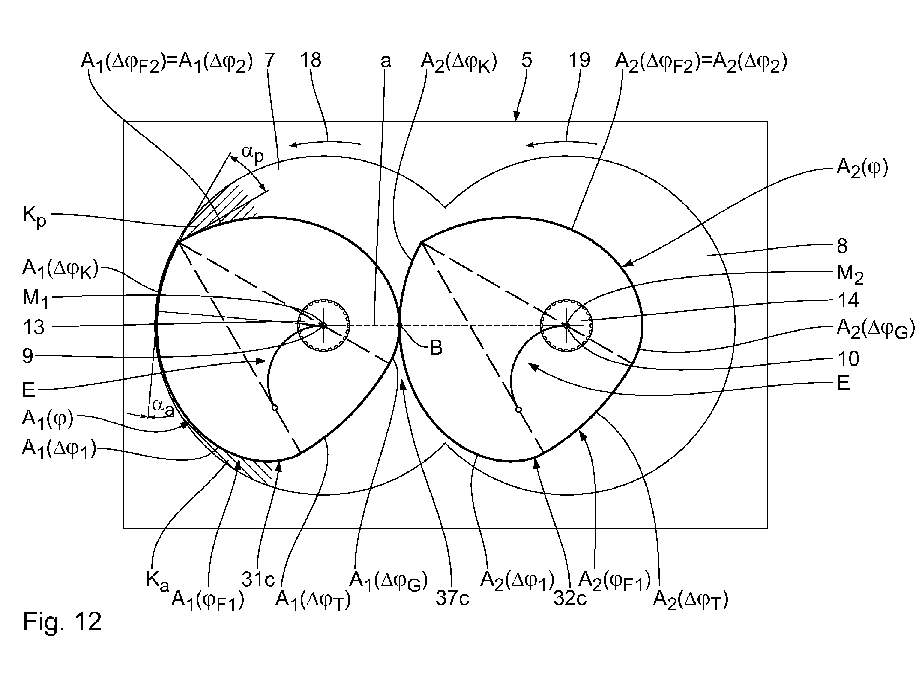

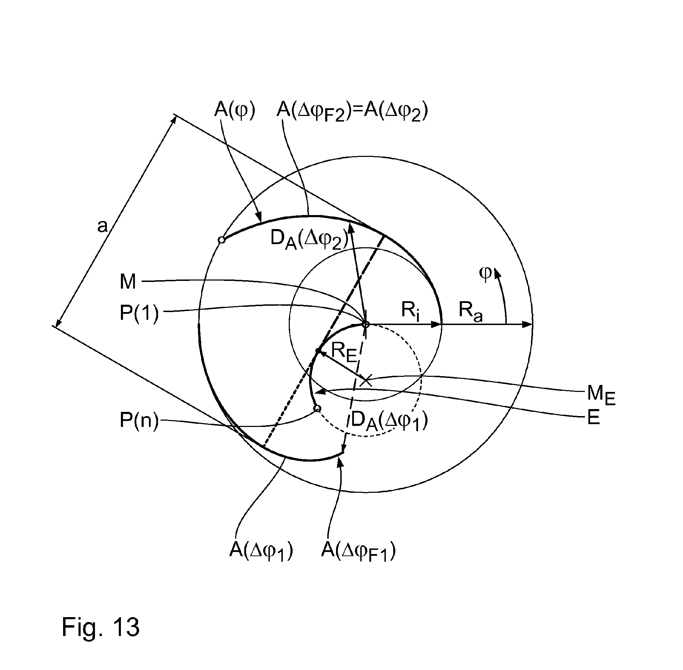

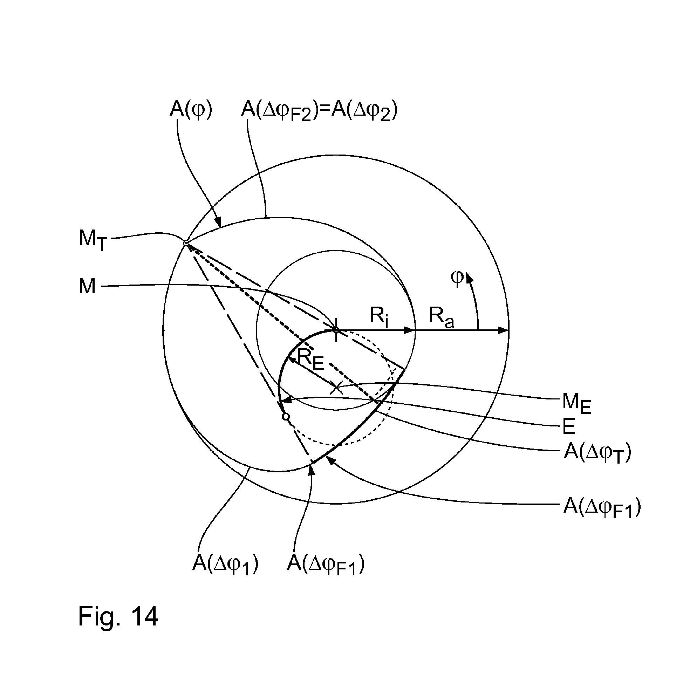

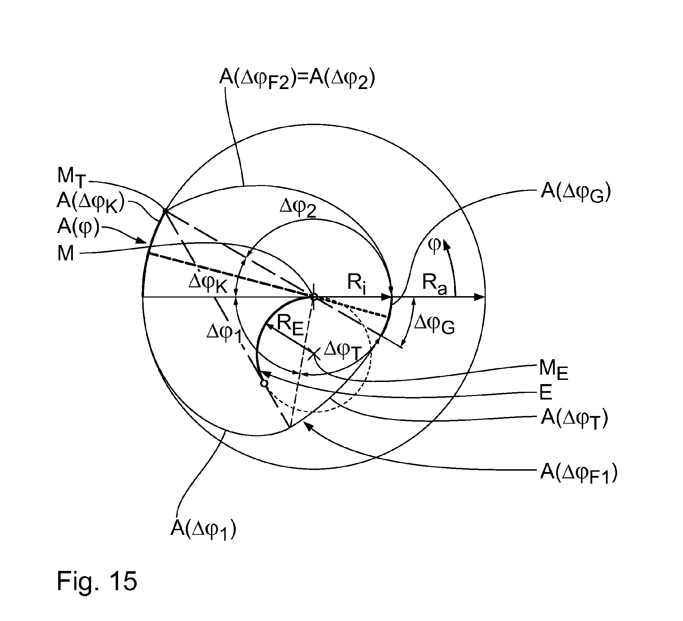

Nachfolgend wird unter Bezugnahme auf die Fig. 12 bis 15 ein viertes Ausführungsbeispiel der Erfindung beschrieben. Im Unterschied zu den vorangegangenen Ausführungsbeispielen ist die Evolute E eine stetige und differenzierbare Kurve in Form eines Kreisbogens um den Mittelpunkt $M_E$. Mathematisch betrachtet kann diese Evolute E dadurch gebildet werden, dass für die Zentriwinkel $\Delta\epsilon$ gemäß dem ersten Ausführungsbeispiel ein Grenzübergang gegen Null durchgeführt wird. Der Abstand $\Delta r$ der Punkte P(i) geht dann in die Bogenlänge ds und der Zentriwinkel $\Delta\epsilon$ in die Änderung der Tangentenrichtung d$\epsilon$ über. Die Evolute E besitzt damit den Krümmungsradius $R_E$ = ds/d$\epsilon$. Die Evolute E ist damit ein Kreisbogen mit im Grenzübergang unendlich vielen Punkten P(i) mit i = 1 bis $\infty$. Die Konstruktion der Flanken $A(\Delta\varphi_{F1})$ und $A(\Delta\varphi_{F2})$ gemäß den Fig. 13 und 14 erfolgt entsprechend dem ersten Ausführungsbeispiel, wobei die Evolute E - wie bereits ausgeführt - ein Kreisbogen ist. Da die Außenkontur-Abschnitte $A(\Delta\varphi_1)$ und $A(\Delta\varphi_2)$ die gleiche Evolute E aufweisen, sind die Knetelemente 31 c und 32c kongruent zueinander. Die Knetelemente 31 c und 32c sind jedoch nicht symmetrisch. Der aktive Schnittwinkel $\alpha_a = 0°$. Demgegenüber ist der passive Schnittwinkel $\alpha_p > 0°$. Die Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

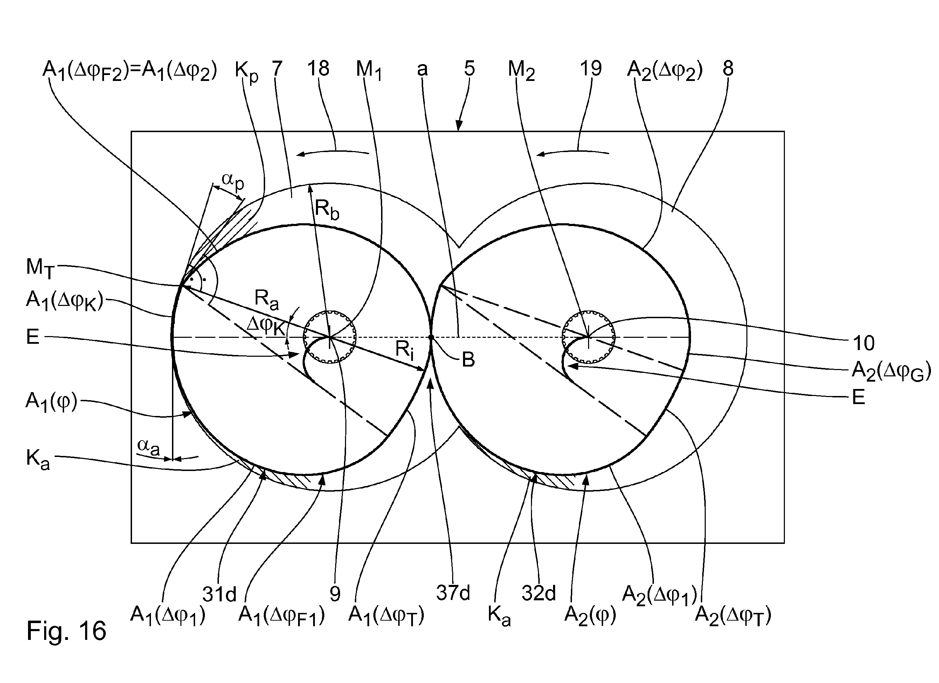

Nachfolgend wird unter Bezugnahme auf Fig. 16 ein fünftes Ausführungsbeispiel der Erfindung beschrieben. Die Knetelemente 31d und 32d sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 20°$. aktive Schnittwinkel $\alpha_a = 0°$. Der passive Schnittwinkel $\alpha_p > 0°$. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

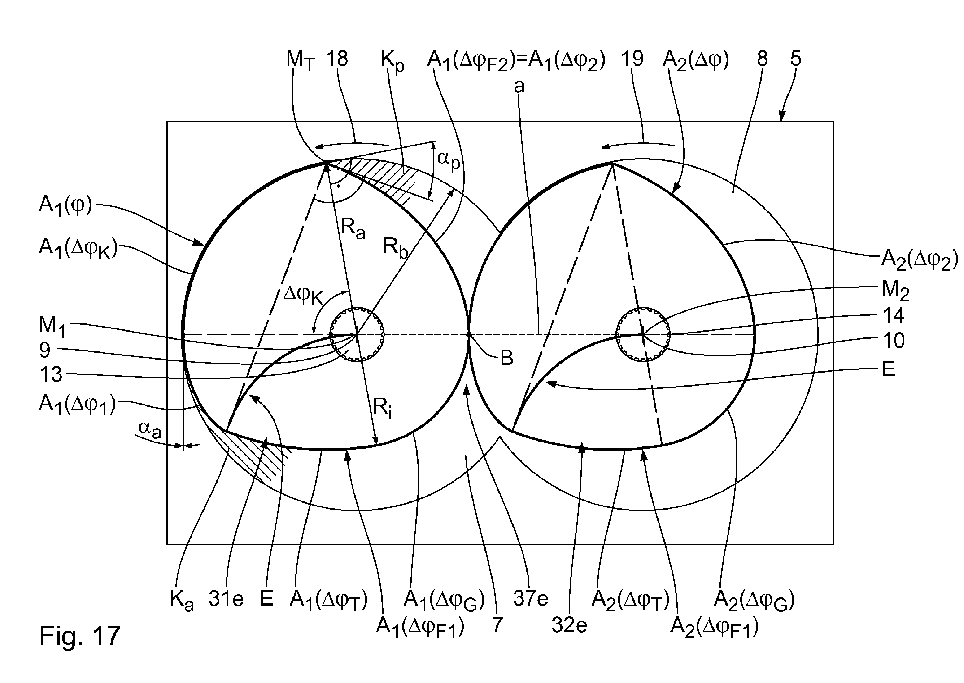

Nachfolgend wird unter Bezugnahme auf Fig. 17 ein sechstes Ausführungsbeispiel der Erfindung beschrieben. Die Knetelemente 31 e und 32e sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 80°$. Der aktive Schnittwinkel $\alpha_a = 0°$. Der passive Schnittwinkel $\alpha_p > 0°$. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

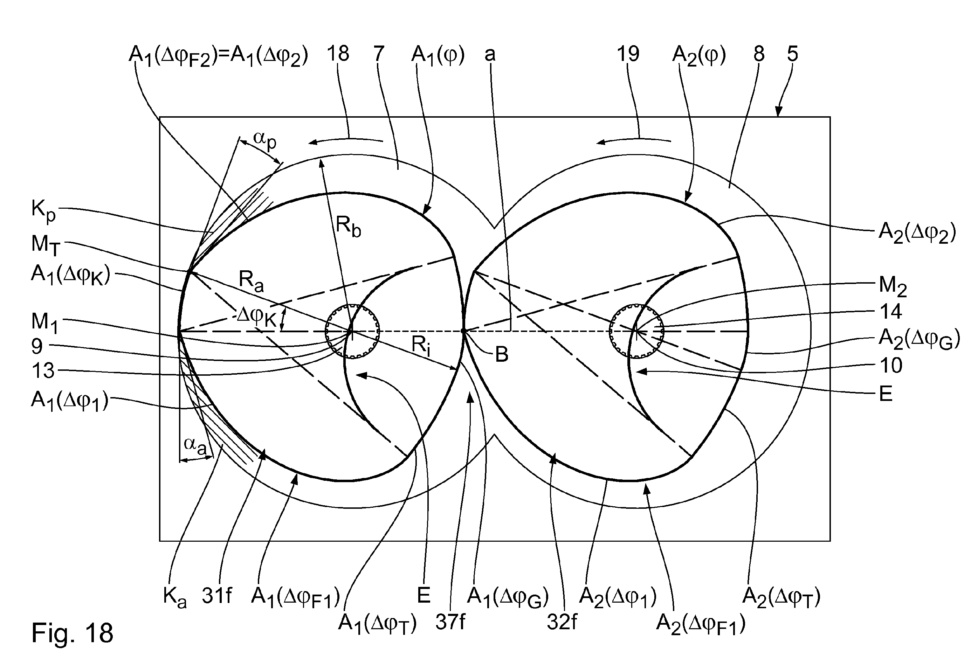

Nachfolgend wird unter Bezugnahme auf Fig. 18 ein siebtes Ausführungsbeispiel der Erfindung beschrieben. Die Knetelemente 31 f und 32f sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 20°$. Der zu der aktiven Flanke $A(\Delta\varphi_{F1})$ zugehörige aktive Schnittwinkel $\alpha_a = 15°$. Der zu der passiven Flanke $A(\Delta\varphi_{F2})$ zugehörige passive Schnittwinkel $\alpha_p = 20°$. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

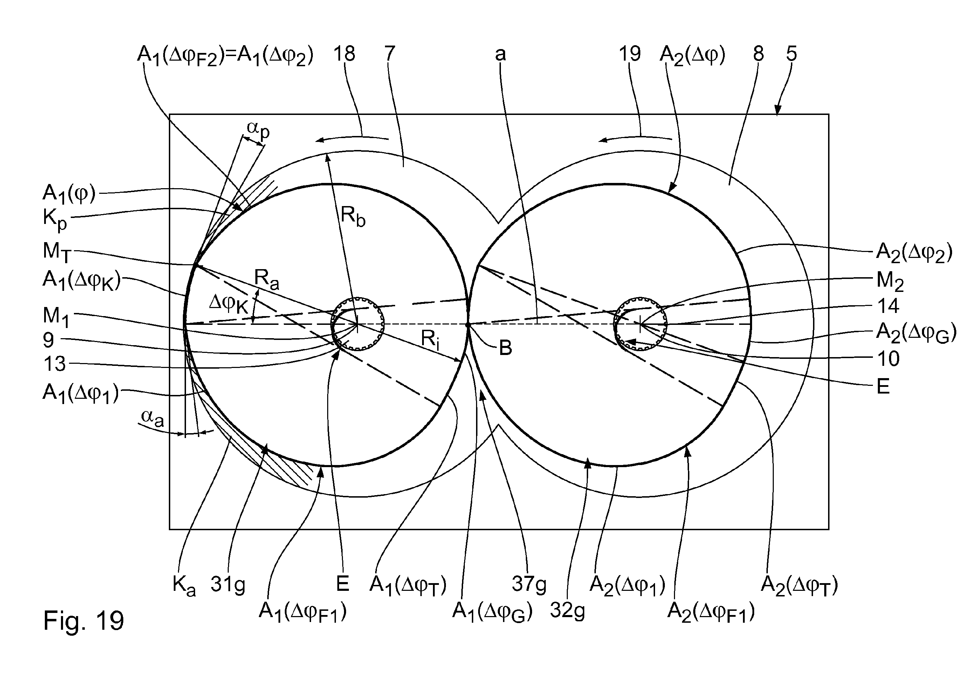

Nachfolgend wird unter Bezugnahme auf Fig. 19 ein achtes Ausführungsbeispiel der Erfindung beschrieben. Die Knetelemente 31g und 32g sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich

1,55. Der Kammwinkel $\Delta\varphi_K = 20°$. Der zu der aktiven Flanke $A(\Delta\varphi_{F1})$ zugehörige aktive Schnittwinkel $\alpha_a = 5°$. Der zu der passiven Flanke $A(\Delta\varphi_{F2})$ zugehörige passive Schnittwinkel $\alpha_p = 10°$. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

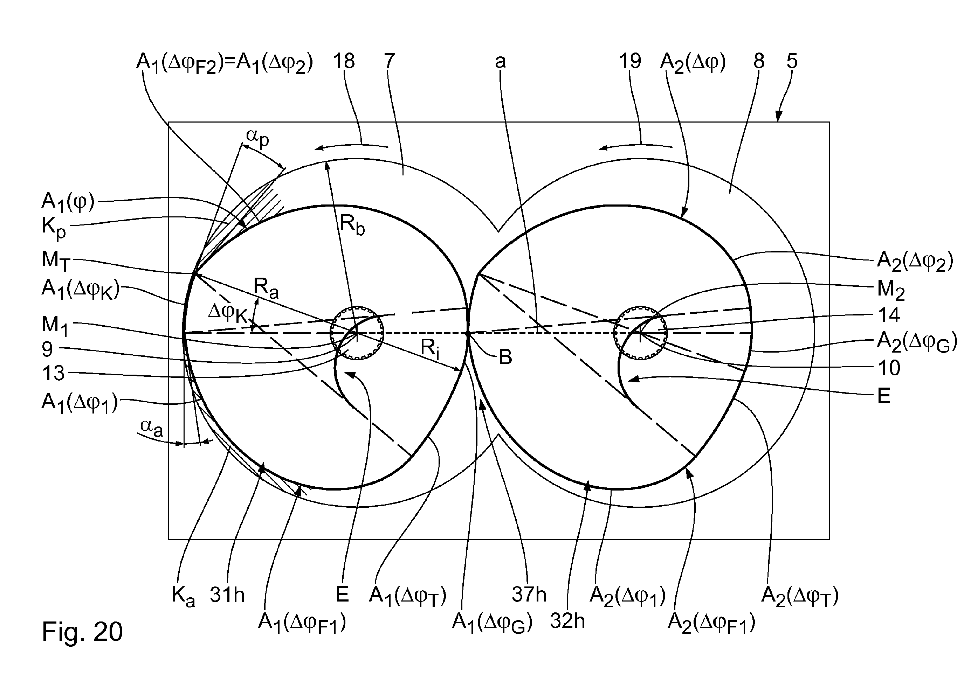

Nachfolgend wird unter Bezugnahme auf Fig. 20 ein neuntes Ausführungsbeispiel der Erfindung beschrieben. Die Knetelemente 31h und 32h sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 20°$. Der aktive zugehörige Schnittwinkel $\alpha_a = 5°$. Der passive Schnittwinkel $\alpha_p = 20°$. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

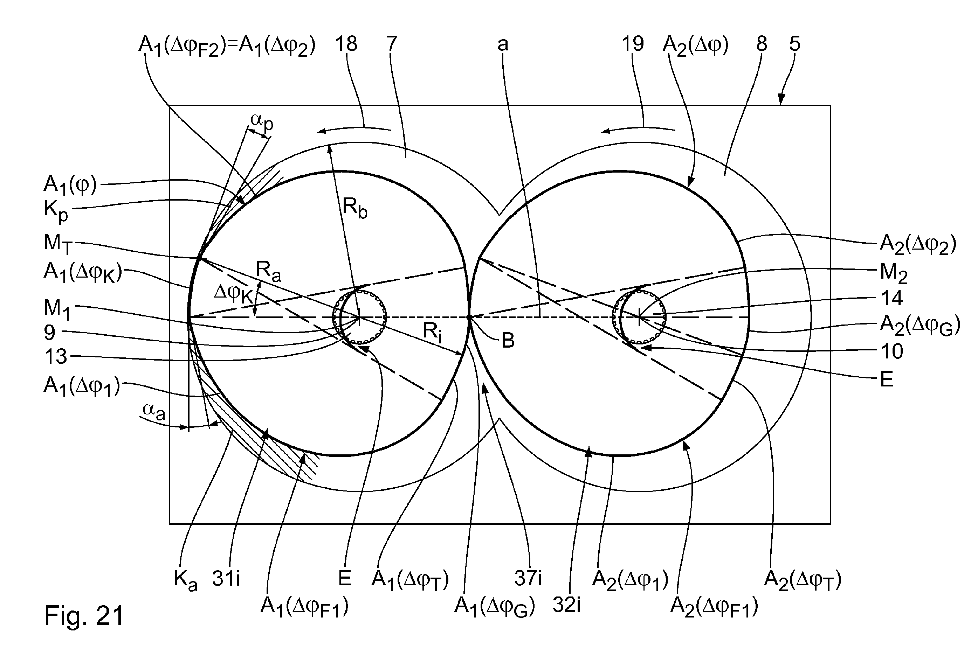

Nachfolgend wird unter Bezugnahme auf Fig. 21 ein zehntes Ausführungsbeispiel der Erfindung beschrieben. Die Knetelemente 31i und 32i sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 20°$. Der aktive Schnittwinkel $\alpha_a = 10°$. Der passive Schnittwinkel $\alpha_p = 10°$. Aufgrund der gleichen Schnittwinkel $\alpha_a$ und $\alpha_p$ sind die Knetelemente 31i und 32i kongruent und symmetrisch. Die zugehörigen Keile $K_a$ und Kp sind gleich ausgebildet. Hinsichtlich der weiteren Funktionsweise und Konstruktion wird auf die vorangegangenen Ausführungsbeispiele verwiesen.

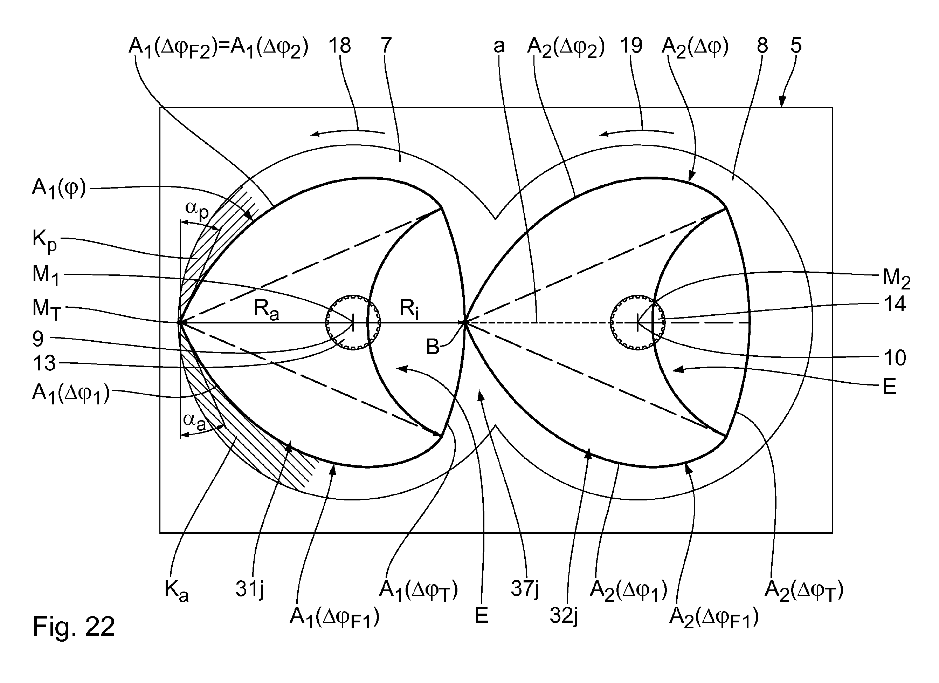

Nachfolgend wird unter Bezugnahme auf Fig. 22 ein elftes Ausführungsbeispiel der Erfindung beschrieben. Die Knetelemente 31j und 32j sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 0°$. Der Kamm $A(\Delta\varphi_K)$ entartet somit zu einem einzigen Punkt, dem Mittelpunkt $M_T$. Der zu der aktiven Flanke $A(\Delta\varphi_{F1})$ zugehörige Schnittwinkel $\alpha_a$ ist maximal. Der zu der passiven Flanke $A(\Delta\varphi_{F2})$ zugehörige Schnittwinkel $\alpha_p$ ist ebenfalls maximal. Aufgrund der gleichen Schnittwinkel $\alpha_a$ und $\alpha_p$ sind die Knetelemente 31j und 32j kongruent und symmetrisch. Die zugehörigen Keile $K_a$ und Kp können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

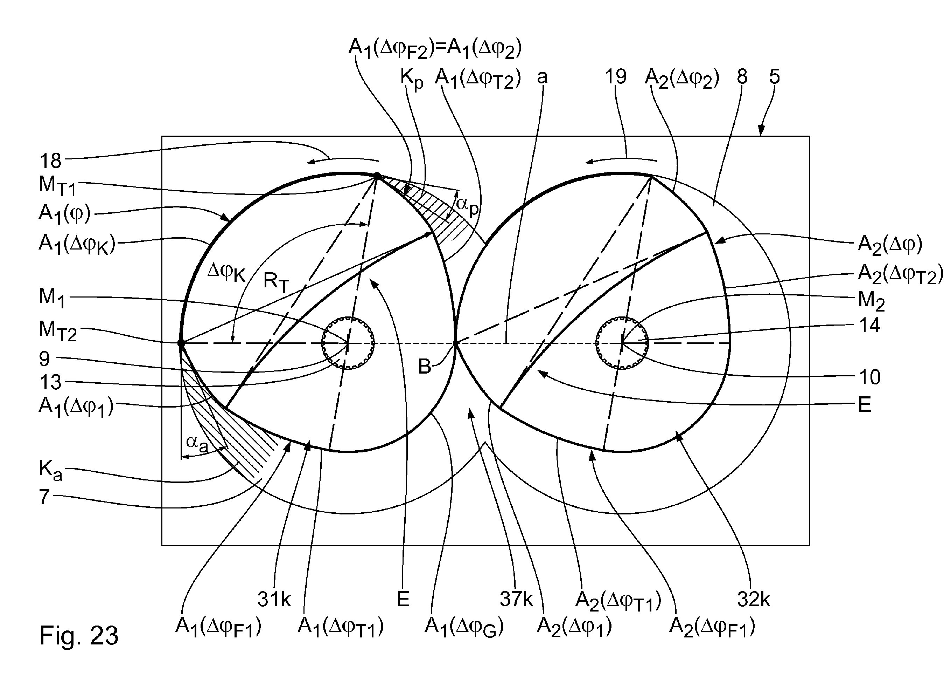

Nachfolgend wird unter Bezugnahme auf Fig. 23 ein zwölftes Ausführungsbeispiel der Erfindung beschrieben. Die Knetelemente 31k und 32k sind entsprechend dem vierten Ausführungsbeispiel ausgebildet und weisen eine Evolute E auf, die eine stetige und differenzierbare Kurve in Form eines Kreisbogens ist. Das Verhältnis von Außenradius $R_a$ zu Kernradius $R_i$ ist gleich 1,55. Der Kammwinkel $\Delta\varphi_K = 100°$. Der aktive Schnittwinkel $\alpha_a$ ist maximal. Der passive Schnittwinkel $\alpha_p$ ist ebenfalls maximal. Aufgrund der gleichen Schnittwinkel $\alpha_a$ und $\alpha_p$ sind die Knetelemente 31k und 32k kongruent und symmetrisch. Im Unterschied zu den vorangegangenen Ausführungsbeispielen wird die passive Flanke $A(\Delta\varphi_{F2})$ aus dem Außenkontur-Abschnitt $A(\Delta\varphi_2)$ und einem weiteren Übergangs-Abschnitt $A(\Delta\varphi_{T2})$ gebildet. Der zweite Übergangs-Abschnitt $A(\Delta\varphi_{T2})$ ergibt sich als Kreisbogen um den Mittelpunkt $M_{T2}$ mit dem Übergangsradius $R_T$, der dem Achsabstand a entspricht. Die zugehörigen Keile $K_a$ und $K_p$ können so flexibel an das zu bearbeitende Kunststoffmaterial angepasst werden. Hinsichtlich der weiteren Funktionsweise und Konstruktion wird auf die vorangegangenen Ausführungsbeispiele verwiesen.

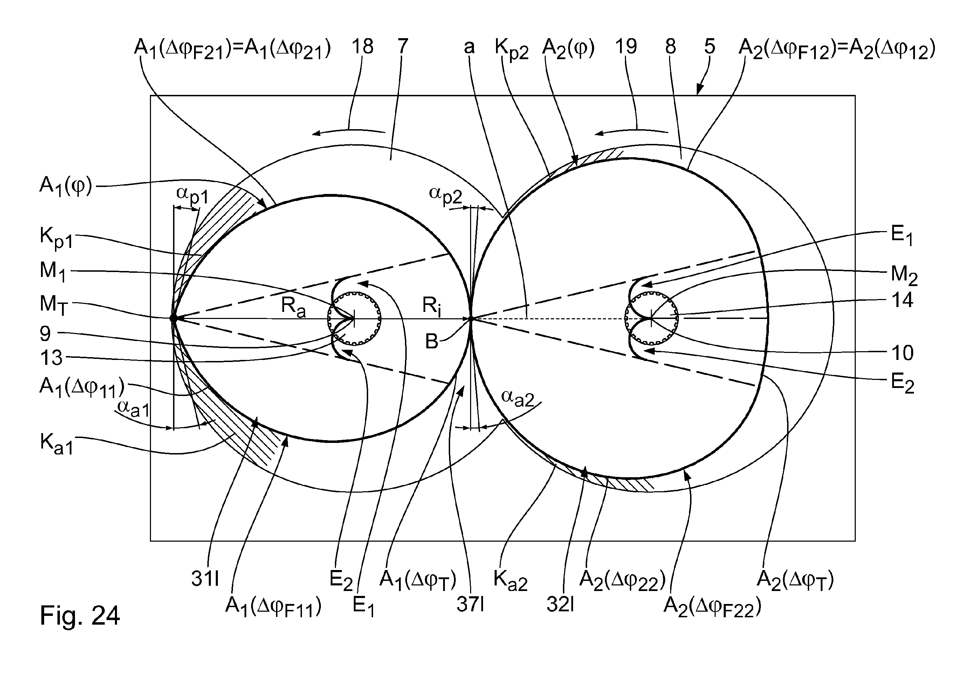

Nachfolgend wird unter Bezugnahme auf Fig. 24 ein dreizehntes Ausführungsbeispiel der Erfindung beschrieben. Die Knetelemente 311 und 321 weisen zwei Evoluten $E_1$ und $E_2$ auf, die entsprechend dem vierten Ausführungsbeispiel ausgebildet sind und eine stetige sowie differenzierbare Kurve in Form eines Kreisbogen sind. Die Knetelemente 311 und 321 sind dementsprechend nicht kongruent, jedoch symmetrisch. Das Verhältnis von Außenradius $R_a$ zu Kernradius $R_i$ ist gleich 1,55. Der Kammwinkel $\Delta\varphi_K = 0°$. Der Kamm $A(\Delta\varphi_K)$ entartet somit zu einem einzigen Punkt, dem Mittelpunkt $M_T$. Die Schnittwinkel $\alpha_{a1}$ und $\alpha_{p1}$ sowie $\alpha_{a2}$ und $\alpha_{p2}$ sind gleich, wodurch sich gleiche Keile $K_{a1}$ und $K_{p1}$ sowie $K_{a2}$ und $K_{p2}$ ergeben. Hinsichtlich der weiteren Funktionsweise und Konstruktion wird auf die vorangegangenen Ausführungsbeispiele verwiesen.

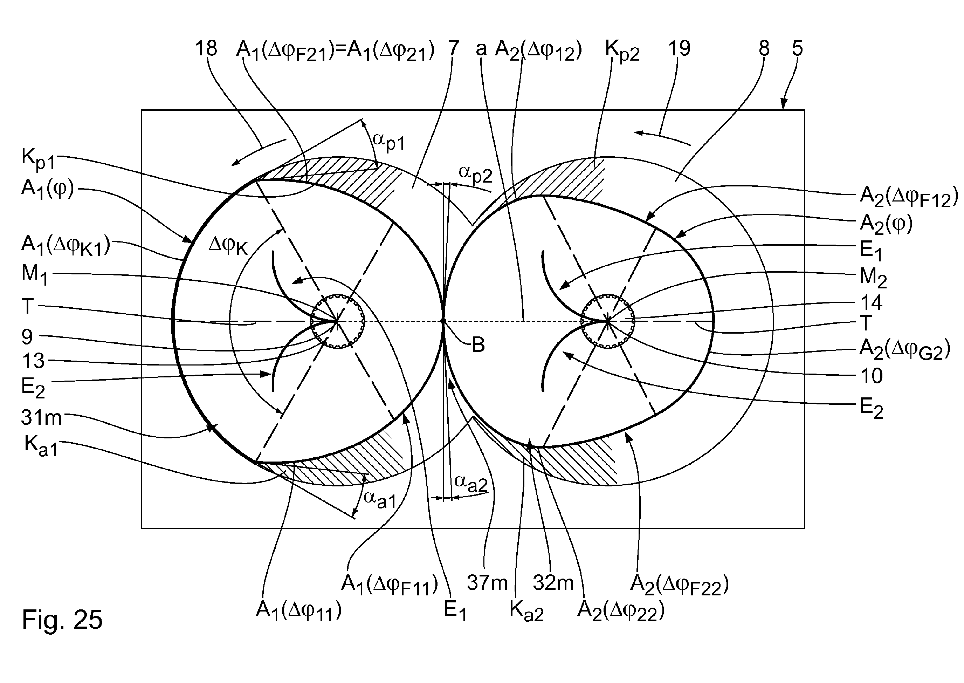

Nachfolgend wird unter Bezugnahme auf Fig. 25 ein vierzehntes Ausführungsbeispiel der Erfindung beschrieben. Die Knetelemente 31 m und 32m weisen zwei Evoluten $E_1$ und $E_2$ auf, die entsprechend dem vierten Ausführungsbeispiel ausgebildet sind und eine stetige sowie differenzierbare Kurve in Form eines Kreisbogens sind. Die Knetelemente 31 m und 32m sind dementsprechend nicht kongruent, jedoch symmetrisch. Das Verhältnis von Außenradius $R_a$ zu Kernradius $R_i$ ist gleich 1,55. Der Kammwinkel $\Delta\varphi_K = 120°$. Die Schnittwinkel $\alpha_{a1}$ und $\alpha_{p1}$ sowie $\alpha_{a2}$ und $\alpha_{p2}$ sind gleich, wodurch sich gleiche Keile $K_{a1}$ und $K_{p1}$ sowie $K_{a2}$ und $K_{p2}$ ergeben. Die Evoluten $E_1$ und $E_2$ weisen eine gemeinsame Tangente T auf, wodurch die Außenkontur-Abschnitte $A_1(\Delta\varphi_{11})$ und $A_1(\Delta\varphi_{21})$ sowie $A_2(\Delta\varphi_{12})$ und $A_2(\Delta\varphi_{22})$ stetig und differenzierbar ineinander übergehen. Hinsichtlich der weiteren Funktionsweise und Konstruktion wird auf die vorangegangenen Ausführungsbeispiele verwiesen.

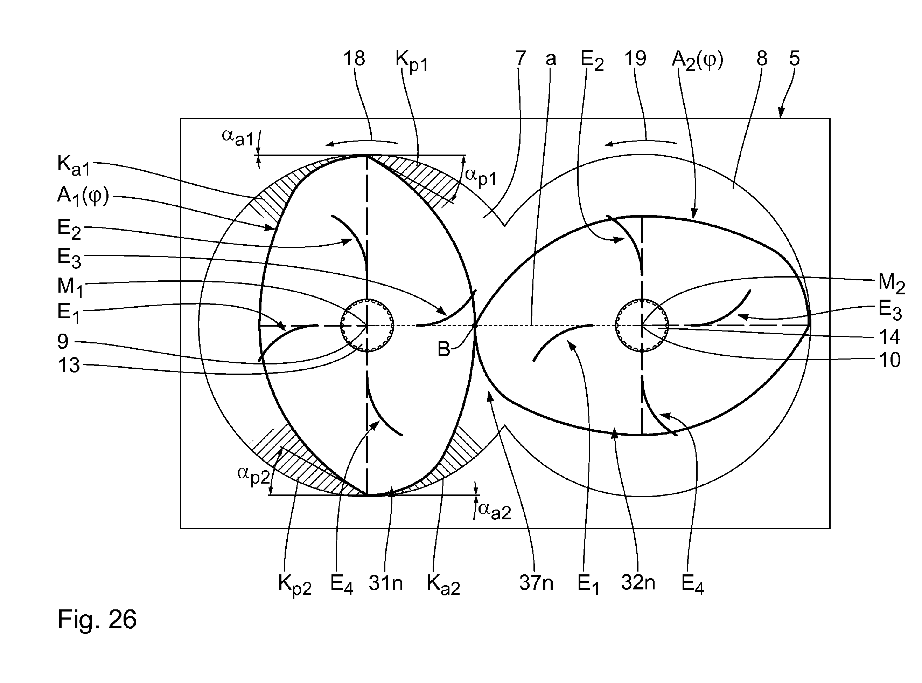

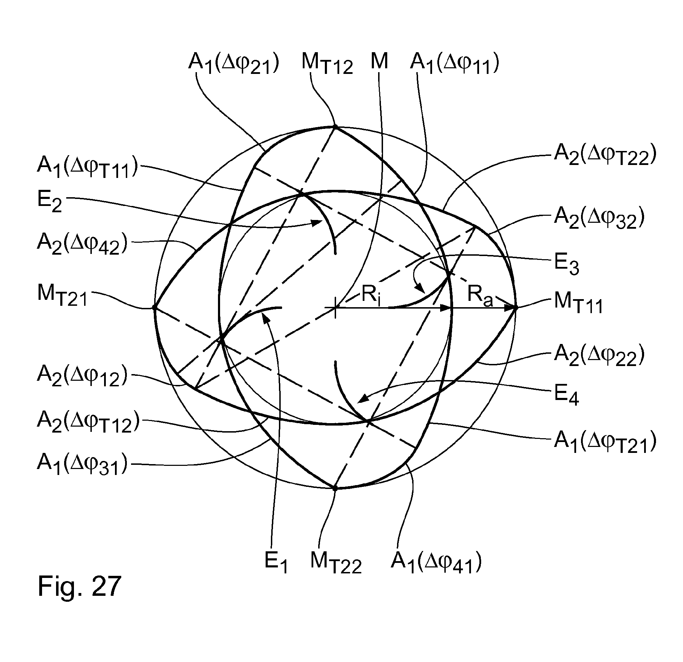

Nachfolgend wird unter Bezugnahme auf die Fig. 26 und 27 ein fünfzehntes Ausführungsbeispiel der Erfindung beschrieben. Die Knetelemente 31n und 32n sind zweigängig ausgebildet. Die Knetelemente 31n und 32n weisen vier Evoluten $E_1$ bis $E_4$ auf, die stetige und differenzierbare Kurven in Form von Kreisbögen sind. Die Knetelemente 31n und 32n sind kongruent. Die Außenkontur $A_1(\varphi)$ des Knetelements 31n setzt sich zusammen aus dem an der Evolute $E_1$ abgewickelten Außenkontur-Abschnitt $A_1(\Delta\varphi_{11})$, dem an der Evolute $E_2$ abgewickelten Außenkontur-Abschnitt $A_1(\Delta\varphi_{21})$, dem Übergangs-Abschnitt $A_1(\Delta\varphi_{T11})$ um den Mittelpunkt $M_{T11}$, dem an der Evolute $E_3$ abgewickelten Außenkontur-Abschnitt $A_1(\Delta\varphi_{31})$, dem an der Evolute $E_4$ abgewickelten Außenkontur-Abschnitt $A_1(\Delta\varphi_{41})$ und dem Übergangs-Abschnitt $A_1(\Delta\varphi_{T21})$ um den Mittelpunkt $M_{T21}$. Die Außenkontur $A_2(\varphi_2)$ des Knetelements 32n ergibt sich anhand der Evoluten $E_1$ bis $E_4$ entsprechend, wobei die Übergangs-Abschnitte $A_2(\Delta\varphi_{T12})$ und $A_2(\Delta\varphi_{T22})$ die Mittelpunkte $M_{T12}$ und $M_{22}$ haben. Die aktiven Schnittwinkel $\alpha_{a1}$ und $\alpha_{a2}$ sind gleich 0°. Die passiven Schnittwinkel $\alpha_{p1}$ und $\alpha_{p2}$ sind gleich und größer 0°. Entsprechend sind die aktiven Keile $K_{a1}$ und $K_{a2}$ sowie die passiven Keile $K_{p1}$ und $K_{p2}$ gleich. Hinsichtlich der weiteren Funktionsweise und Konstruktion wird auf die vorangegangenen Ausführungsbeispiele verwiesen.

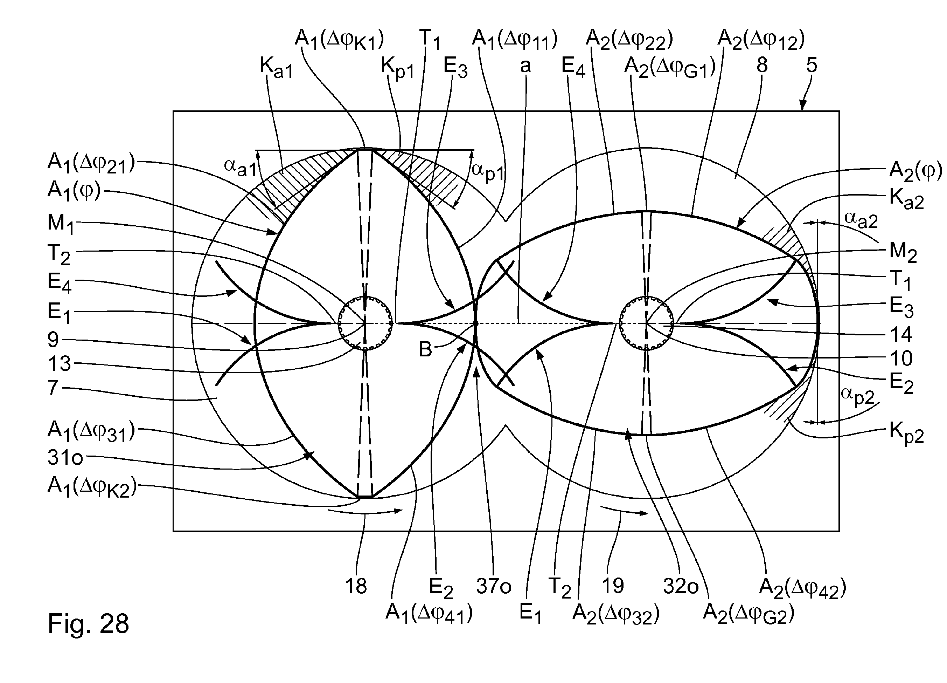

Nachfolgend wird unter Bezugnahme auf Fig. 28 ein sechzehntes Ausführungsbeispiel der Erfindung beschrieben. Die Knetelemente 31o und 32o sind entsprechend dem fünfzehnten Ausführungsbeispiel zweigängig ausgebildet und weisen vier Evoluten $E_1$ bis $E_4$ in Form von Kreisbögen auf. Die Knetelemente 31o und 32o sind nicht kongruent, jedoch symmetrisch. Die Außenkontur $A_1(\varphi)$ des Behandlungselements 31o setzt sich zusammen aus dem an der Evolute $E_1$ abgewickelten Außenkontur-Abschnitt $A_1(\Delta\varphi_{11})$, dem Kamm $A_1(\Delta\varphi_{K1})$ um den Mittelpunkt $M_1$, dem an der Evolute $E_2$ abgewickelten Außenkontur-Abschnitt $A_1(\Delta\varphi_{21})$, dem an der Evolute $E_3$ abgewickelten Außenkontur-Abschnitt $A_1(\Delta\varphi_{31})$, dem Kamm $A_1(\Delta\varphi_{K2})$ um den Mittelpunkt $M_1$ und dem an der Evolute $E_4$ abgewickelten Außenkontur-Abschnitt $A_1(\Delta\varphi_{41})$. Die Evoluten $E_2$ und $E_3$ sowie $E_1$ und $E_4$ weisen jeweils eine gemeinsame Tangente $T_1$ bzw. $T_2$ auf, wodurch die Außenkontur-Abschnitte $A_1(\Delta_{21})$ und $A_1(\Delta\varphi_{31})$ sowie $A_1(\Delta\varphi_{41})$ und $A_1(\Delta\varphi_{11})$ stetig und differenzierbar ineinander übergehen. Die Außenkontur $A_2(\varphi)$ des Behandlungselements 32o wird entsprechend an den Evoluten $E_1$ bis $E_4$ gebildet, wobei die Außenkontur-Abschnitte $A_2(\Delta\varphi_{12})$ und $A_2(\Delta\varphi_{22})$ durch den Grund $A_2(\Delta\varphi_{G1})$ und die Außenkontur-Abschnitte $A_2(\Delta\varphi_{32})$ sowie $A_2(\Delta\varphi_{42})$ durch den Grund $A_2(\Delta\varphi_{G2})$ verbunden sind. Der aktive Schnittwinkel $\alpha_{a1}$ sowie der passive Schnittwinkel $\alpha_{p1}$ des Behandlungselements 31o betragen ca. 33°. Der aktive Schnittwinkel $\alpha_{a2}$ und passive Schnittwinkel $\alpha_{p2}$ des Behandlungselements 32o betragen 0°. Hierdurch sind die Keile $K_{a1}$ und $K_{p1}$ gleich. Entsprechendes gilt für die Keile $K_{a2}$ und $K_{p2}$. Hinsichtlich der weiteren Funktionsweise und Konstruktion wird auf die vorangegangenen Ausführungsbeispiele verwiesen.

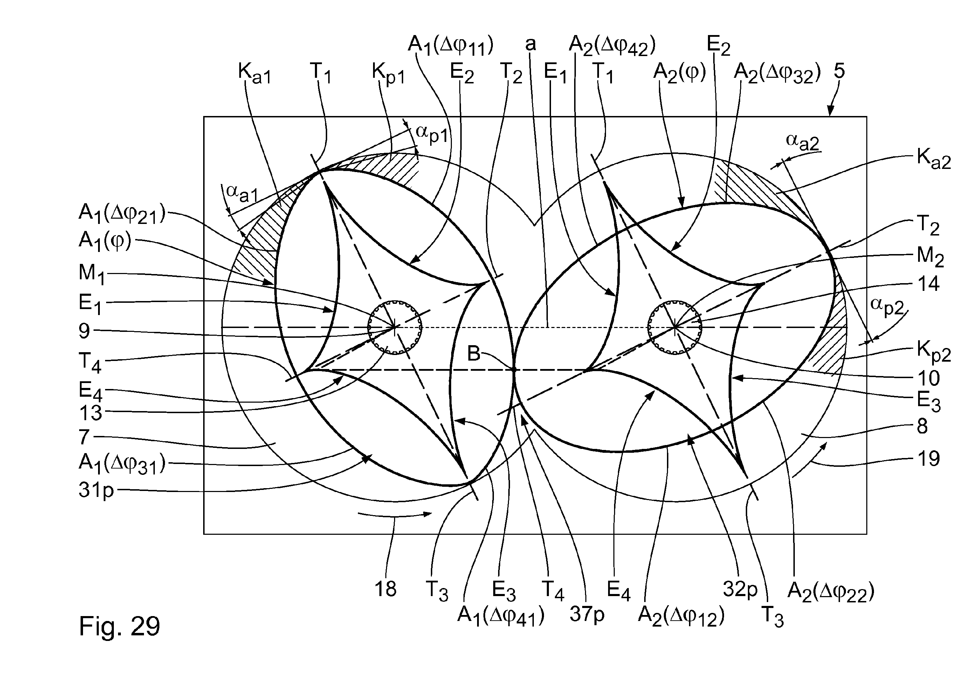

Nachfolgend wird unter Bezugnahme auf Fig. 29 ein siebzehntes Ausführungsbeispiel der Erfindung beschrieben. Die Knetelemente 31p und 32p sind zweigängig ausgebildet. Die Knetelemente 31p und 32p sind nicht kongruent, jedoch symmetrisch. Die Knetelemente 31p und 32p weisen vier Evoluten $E_1$ bis $E_4$ auf, die jeweils stetige und differenzierbare Kurven sind. Die Evoluten $E_1$ bis $E_4$ bilden einen Astroiden, der durch folgende Gleichungen beschreibbar ist:

$$x = c \cdot (\cos(t))^n$$

$$y = d \cdot (\sin(t))^n$$

mit den Faktoren c und d und dem Exponenten n, wobei c > d und n = 3 ist. Die Außenkontur $A_1(\varphi)$ des Knetelements 31p setzt sich zusammen aus dem an der Evolute $E_1$ abgewickelten Außenkontur-Abschnitt $A_1(\Delta\varphi_{11})$, dem an der Evolute $E_2$ abgewickelten Außenkontur-Abschnitt $A_1(\Delta\varphi_{21})$, dem an der Evolute $E_3$ abgewickelten Außenkontur-Abschnitt $A_1(\Delta\varphi_{31})$ und dem an der Evolute $E_4$ abgewickelten Außenkontur-Abschnitt $A_1(\Delta\varphi_{41})$. Die Evoluten $E_1$ bis $E_4$ weisen jeweils paarweise gemeinsame Tangenten $T_1$ bis $T_4$ auf, wodurch die Außenkontur-Abschnitte $A_1(\Delta\varphi_{11})$ bis $A_1(\Delta\varphi_{41})$ stetig und differenzierbar ineinander übergehen. Die Außenkontur $A_2(\varphi)$ des Knetelements 32p setzt sich entsprechend zusammen. Der aktive Schnittwinkel $\alpha_{a1}$ und passive Schnittwinkel $\alpha_{p1}$ des Knetelements 31p sind gleich, wodurch auch die Keile $K_{a1}$ und $K_{p1}$ gleich sind. Entsprechendes gilt für den aktiven Schnittwinkel $\alpha_{a2}$ und passiven Schnittwinkel $\alpha_{p2}$ sowie die entsprechenden Keile $K_{a2}$ und $K_{p2}$ des Knetelements 32p. Die Schnittwinkel $\alpha_{a2}$ und $\alpha_{p2}$ sind jedoch kleiner als die Schnittwinkel $\alpha_{a1}$ und $\alpha_{p1}$. Die Kämme und Gründe der Knetelemente 31p und 32p sind zu einzelnen Punkten entartet. Hinsichtlich der weiteren Funktionsweise und Konstruktion wird auf die vorangegangenen Ausführungsbeispiele verwiesen.

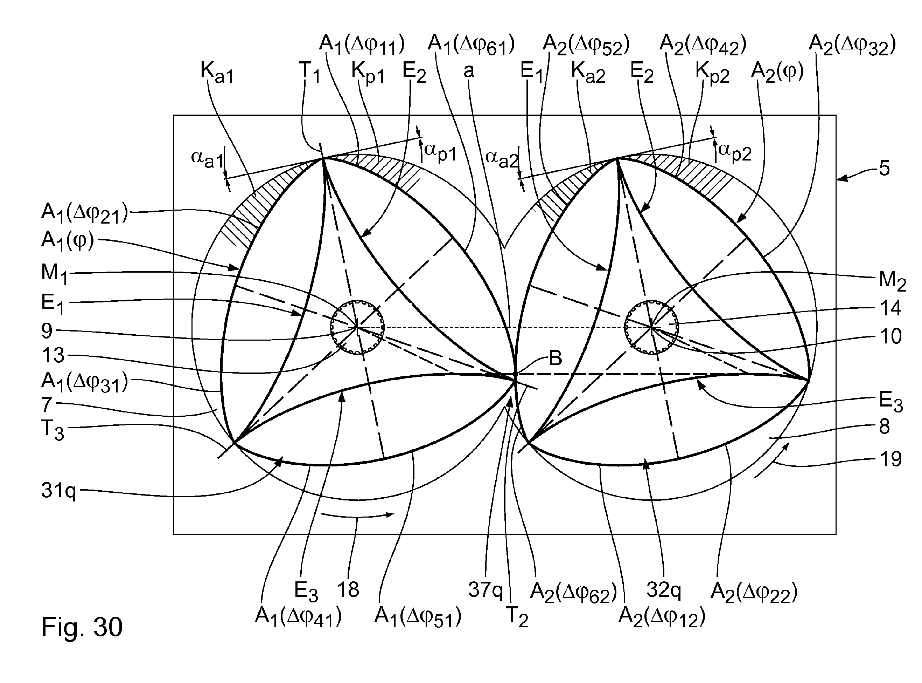

Nachfolgend wird unter Bezugnahme auf Fig. 30 ein achtzehntes Ausführungsbeispiel beschrieben. Die Knetelemente 31q und 32q sind dreigängig ausgebildet. Die Knetelemente 31q und 32q sind kongruent und symmetrisch. Sie weisen drei Evoluten $E_1$ bis $E_3$ auf, die jeweils stetig und differenzierbare Kurven sind und gemeinsam einen Tricuspoid bilden. Die Außenkontur $A_1(\varphi)$ des Knetelements 31q setzt sich zusammen aus dem an der Evolute $E_1$ abgewickelten Außenkontur-Abschnitt $A_1(\Delta\varphi_{11})$, dem an der Evolute $E_2$ abgewickelten Außenkontur-Abschnitt $A_1(\Delta\varphi_{21})$, dem an der Evolute $E_3$ abgewickelten Außenkontur-Abschnitt $A_1(\Delta\varphi_{31})$ sowie den bei einem entsprechenden Abwickelvorgang gebildeten Außenkontur-Abschnitten $A_1(\Delta\varphi_{41})$ bis $A_1(\Delta\varphi_{61})$. Da die Evoluten $E_1$ bis $E_3$ jeweils paarweise eine gemeinsame Tangente $T_1$ bis $T_3$ aufweisen, gehen die Außenkontur-Abschnitte $A_1(\Delta\varphi_{11})$ bis $A_1(\Delta\varphi_{61})$ stetig und differenzierbar ineinander über. Die aktiven Schnittwinkel $\alpha_{a1}$ und $\alpha_{a2}$ sowie die passiven Schnittwinkel $\alpha_{p1}$ und $\alpha_{p2}$ sind gleich groß, wodurch sich entsprechende Keile $K_{a1}$, $K_{a2}$, $K_{p1}$ und $K_{p2}$ ergeben. Die Außenkontur $A_2(\varphi)$ des Knetelements 32q wird entsprechend zu dem Knetelement 31q gebildet. Hinsichtlich der weiteren Funktion und Konstruktion wird auf die vorangegangenen Ausführungsbeispiele verwiesen.

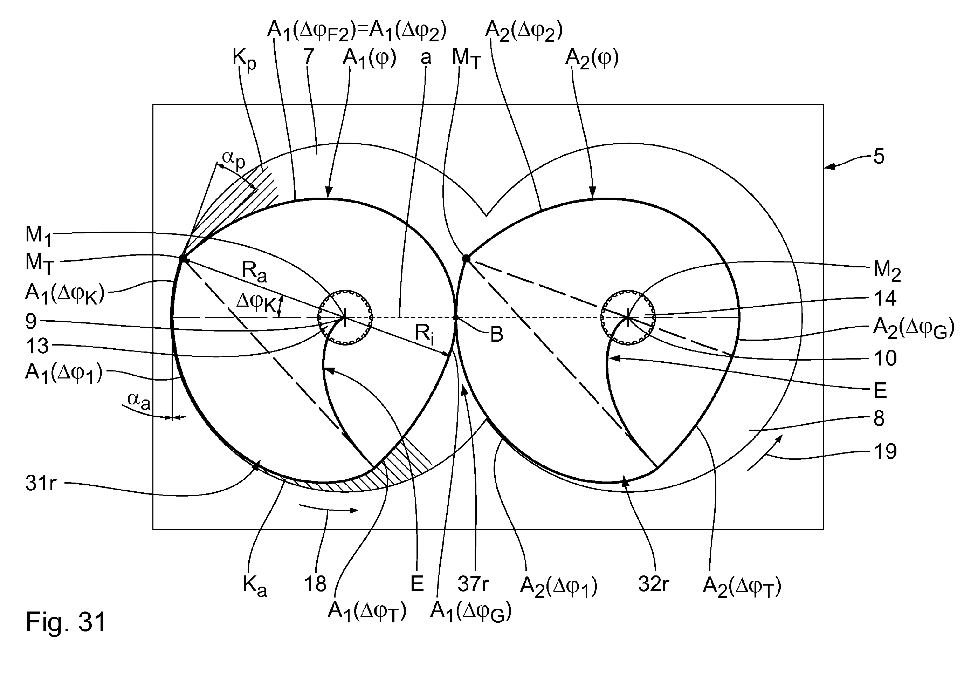

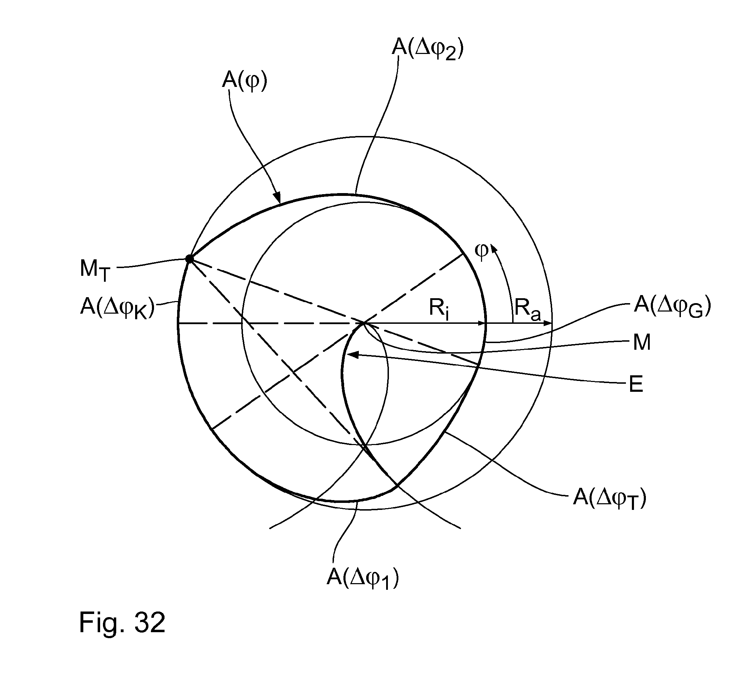

Nachfolgend wird unter Bezugnahme auf die Fig. 31 und 32 ein neunzehntes Ausführungsbeispiel der Erfindung beschrieben. Die Knetelemente 31r und 32r sind eingängig ausgebildet. Sie sind kongruent, jedoch nicht symmetrisch. Die Knetelemente 31r und 32r weisen eine Evolute E auf, die eine stetige und differenzierbare Kurve in Form einer Spirale ist. Die Spirale ist durch die Gleichung

$$\rho = k \cdot t^n$$

beschreibbar, wobei p der Radius, k eine Konstante und t der Winkel (in Polarkoordinaten) der Spirale ist. Die Knetelemente 31r und 32r weisen einen Kammwinkel $\Delta\varphi_K = 20°$ auf. Der aktive Schnittwinkel $\alpha_a = 0°$. Der passive Schnittwinkel $\alpha_{p1} > 0°$. Der Exponent n ist gleich 2,5. Die spiralförmige Evolute E ist zusätzlich um 180° gedreht. Hinsichtlich der weiteren Funktionsweise und Konstruktion wird auf die vorangegangenen Ausführungsbeispiele, insbesondere auf das vierte Ausführungsbeispiel, verwiesen.

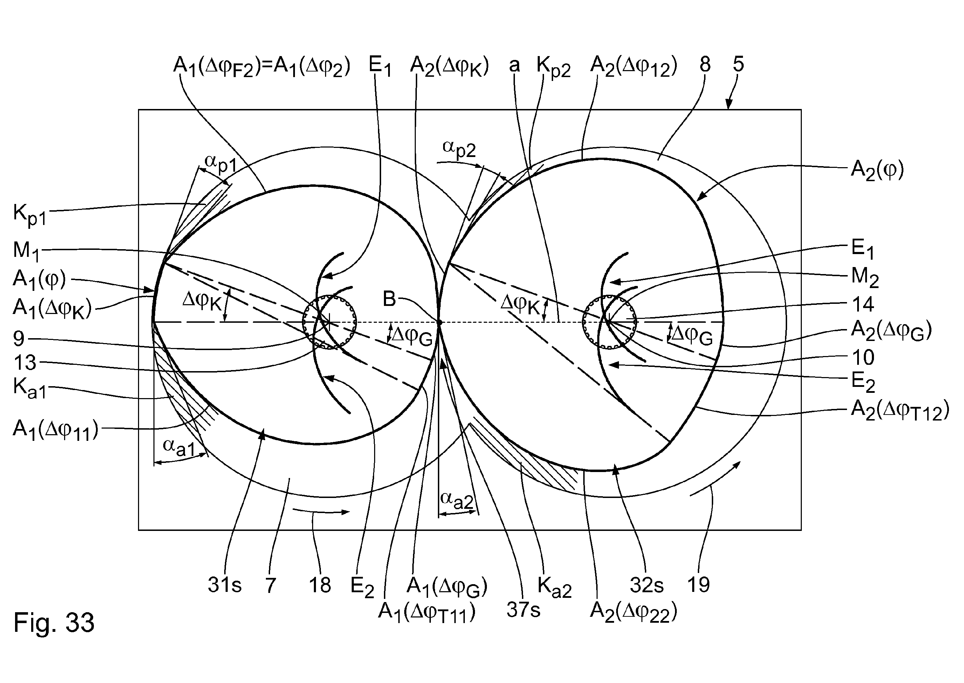

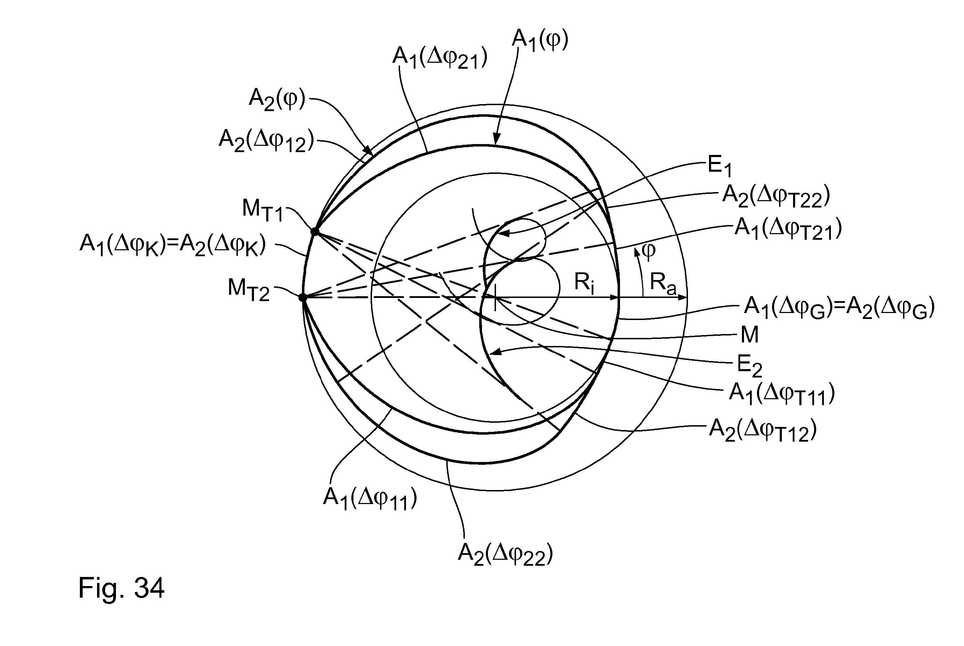

Nachfolgend wird unter Bezugnahme auf die Fig. 33 und 34 ein zwanzigstes Ausführungsbeispiel der Erfindung beschrieben. Die Knetelemente 31s und 32s sind eingängig ausgebildet und nicht kongruent. Die Knetelemente 31s und 32s weisen zwei Evoluten $E_1$ und $E_2$ auf, die jeweils eine stetige und differenzierbare Kurve in Form einer Spirale bilden. Der Kammwinkel $\Delta\varphi_K = 20°$. Entsprechend ist der Grundwinkel $\Delta\varphi_G = 20°$. Der aktive Schnittwinkel $\alpha_{a1} = 20°$. Der aktive Schnittwinkel $\alpha_{a2}$ ist gleich 10°. Der Exponent n = 1,0. Die spiralförmige Evolute $E_1$ bzw. $E_2$ sind um 120° bzw. 100° gedreht. Hinsichtlich der weiteren Funktionsweise und Konstruktion wird auf die vorangegangenen Ausführungsbeispiele verwiesen, insbesondere auf das dritte und neunzehnte Ausführungsbeispiel.

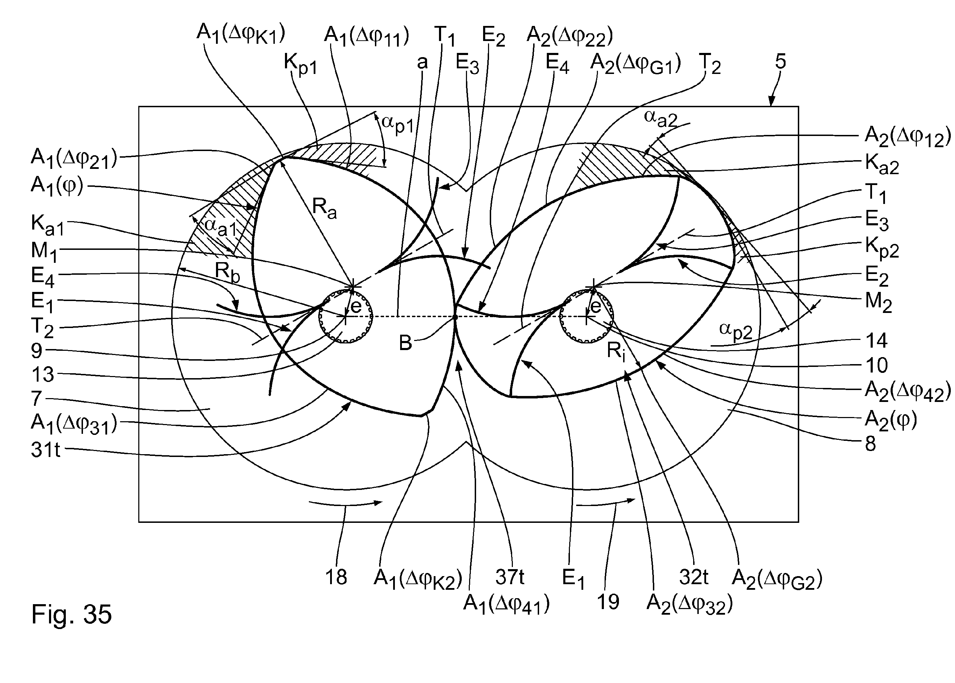

Nachfolgend wird unter Bezugnahme auf Fig. 35 ein einundzwanzigstes Ausführungsbeispiel der Erfindung beschrieben. Die Knetelemente 31t und 32t sind entsprechend dem sechzehnten Ausführungsbeispiel ausgebildet. Im Unterschied zu den vorangegangenen Ausführungsbeispielen sind die Knetelemente 31t und 32t mit ihren Längsachsen $M_1$ und $M_2$ exzentrisch zu den zugehörigen Drehachsen 9 und 10 angeordnet. Die Längsachsen $M_1$ bzw. $M_2$ weisen somit einen Abstand e von den zugehörigen Drehachsen 9 bzw. 10 auf, der die Exzentrität charakterisiert. Aufgrund der exzentrischen Anordnung ist die Form der Keile $K_{a1}$ und $K_{p1}$ bzw. der Keile $K_{a2}$ und $K_{p2}$ sowie die Größe der Schnittwinkel

$\alpha_{a1}$ und $\alpha_{p1}$ bzw. $\alpha_{a2}$ und $\alpha_{p2}$ von den Drehstellung der Knetelemente 31t und 32t abhängig. Der Abstand e kann längs der Drehachsen 9, 10 konstant sein oder variieren. Darüber hinaus kann der Winkel, in dem die Knetelemente 31t bzw. 32t exzentrisch ausgerückt sind, konstant sein oder variieren. Hinsichtlich der weiteren Funktionsweise wird auf die vorangegangenen Ausführungsbeispiele verwiesen. Insbesondere können auch die in den vorangegangenen Ausführungsbeispielen beschriebenen Behandlungselemente 31, 32 bis 31s, 32s entsprechend dem einundzwanzigsten Ausführungsbeispiel exzentrisch angeordnet sein.

**Patentansprüche**

1. Behandlungselement zur Behandlung von Material in einer Mehrwellen-Schneckenmaschine mit

   - einer Längsachse M,
   - einem jeweils die Längsachse M als Mittelpunkt aufweisenden Kernradius $R_i$ und einem Außenradius $R_a$,
   - einer um die Längsachse M verlaufenden Außenkontur $A(\varphi)$, wobei

      -- $\varphi$ der Winkel um die Längsachse M ist und
      -- $R_i \leq D_A(\varphi) \leq R_a$ für einen Abstand $D_A(\varphi)$ der Außenkontur $A(\varphi)$ von der Längsachse M gilt,

   **dadurch gekennzeichnet, dass**
   - die Außenkontur $A(\varphi)$ mindestens einen entlang eines Winkelabschnitts $\Delta\varphi$ verlaufenden Außenkontur-Abschnitt $A(\Delta\varphi)$ aufweist,

      -- der einen sich stetig ändernden Abstand $D_A(\Delta\varphi)$ von der Längsachse M hat, wobei $R_i < DA(\Delta\varphi) < R_a$ ist, und
      -- der eine zugehörige Evolute E aufweist,

         --- die eine Menge von n Punkten P(i) mit i = 1 bis n und n ≥ 3 ist,
         --- wobei jeder der Punkte P(i) außerhalb der Längsachse M und innerhalb des Außenradius $R_a$ liegt, und
         --- wobei jeweils zwei benachbarte Punkte P(i) und P(i+1) einen Abstand $\Delta r(i)$ voneinander aufweisen, der kleiner als $R_i/2$ ist.

2. Behandlungselement nach Anspruch 1, **dadurch gekennzeichnet, dass** jeweils zwei benachbarte Punkte P(i) und P(i+1) einen Abstand $\Delta r(i)$ voneinander aufweisen, der kleiner als $R_i/4$, insbesondere kleiner als $R_i/6$, und insbesondere kleiner als $R_i/8$ ist, wobei die jeweils zwei benachbarten Punkte P(i) und P(i+1) zu benachbarten Evolventenbögen E'(i) und E' (i+1) gehören.

3. Behandlungselement nach Anspruch 1 oder 2, **dadurch gekennzeichnet, dass** jeweils zwei benachbarte Punkte P(i) und P(i+1) einen konstanten Abstand $\Delta r$ voneinander aufweisen.

4. Behandlungselement nach einem der Ansprüche 1 bis 3, **dadurch gekennzeichnet, dass** die zu den Punkten P(i) gehörigen Evolventenbögen E'(i) jeweils einen Zentriwinkel $\Delta\varepsilon(i)$ aufweisen, der kleiner als 60°, insbesondere kleiner als 45°, und insbesondere kleiner als 30° ist.

5. Behandlungselement nach einem der Ansprüche 1 bis 4, **dadurch gekennzeichnet, dass** die zu den Punkten P(i) gehörigen Evolventenbögen E'(i) konstante Zentriwinkel $\Delta\varepsilon$ aufweisen.

6. Behandlungselement nach einem der Ansprüche 1 bis 5, **dadurch gekennzeichnet, dass** die Punkte P(i) auf einer stetigen und differenzierbaren Kurve liegen, die eine gleichbleibende Krümmungsrichtung aufweist.

7. Behandlungselement nach Anspruch 6, **dadurch gekennzeichnet, dass** die Evolute E zumindest abschnittsweise gleich der Kurve ist.

8. Behandlungselement nach einem der Ansprüche 1 bis 7, **dadurch gekennzeichnet, dass** der mindestens eine Außenkontur-Abschnitt $A(\Delta\varphi)$ über den gesamten Winkelabschnitt $\Delta\varphi$ gekrümmt ist.

9. Behandlungselement nach einem der Ansprüche 1 bis 8, **dadurch gekennzeichnet, dass** die Außenkontur $A(\varphi)$ mindestens zwei Außenkontur-Abschnitte $A(\varphi_1)$ und $A(\varphi_2)$, und insbesondere mindestens vier Außenkontur-Abschnitte $A(\varphi_1)$ bis $A(\varphi_4)$ aufweist.

10. Behandlungselement nach einem der Ansprüche 1 bis 9, **dadurch gekennzeichnet, dass** die Außenkontur $A(\varphi)$ mindestens zwei Außenkontur-Abschnitte $A(\Delta\varphi_j)$ und $A(\Delta\varphi_{j+1})$ aufweist, die eine gemeinsame Evolute $E_j$ haben.

11. Behandlungselement nach einem der Ansprüche 1 bis 9, **dadurch gekennzeichnet, dass** die Außenkontur $A(\varphi)$ mindestens zwei Außenkontur-Abschnitte $A(\Delta\varphi_j)$ und $A(\Delta\varphi_{j+1})$ aufweist und die mindestens zwei zugehörigen Evoluten $E_j$ und $E_{j+1}$ unterschiedlich sind.

12. Behandlungselement nach einem der Ansprüche 1 bis 11, **dadurch gekennzeichnet, dass** die Außenkontur $A(\varphi)$ mindestens zwei Außenkontur-Abschnitte $A(\Delta\varphi_j)$ und $A(\Delta\varphi_{j+1})$ aufweist und die min-

destens zwei zugehörigen Evoluten $E_j$ und $E_{j+1}$ eine gemeinsame Tangente (T) haben.

13. Behandlungselement nach einem der Ansprüche 1 bis 12, **dadurch gekennzeichnet, dass** die Außenkontur $A(\varphi)$ eine einheitliche Krümmungsrichtung aufweist.

14. Behandlungselement nach einem der Ansprüche 1 bis 13, **dadurch gekennzeichnet, dass** die Außenkontur $A(\varphi)$ mehrgängig, insbesondere zweigängig ausgebildet ist.

15. Mehrwellen-Schneckenmaschine mit

   - einem Gehäuse (2),
   - mindestens zwei zueinander parallelen und einander durchdringenden Gehäusebohrungen (7, 8),
   - mindestens zwei in den Gehäusebohrungen (7, 8) konzentrisch angeordneten Wellen (13, 14),

      -- die um zugehörige Drehachsen (9, 10) drehantreibbar, insbesondere gleichsinnig drehantreibbar, sind und
      -- die einen Achsabstand a der Drehachsen (9, 10) aufweisen,

   - mehreren Behandlungselementen (27 bis 34) zur Behandlung von Material,

      -- die in einer Axialrichtung hintereinander auf den mindestens zwei Wellen (13, 14) drehfest angeordnet sind und
      -- die miteinander dicht kämmend ausgebildet sind,

   **dadurch gekennzeichnet, dass**
   - mindestens zwei unmittelbar nebeneinander angeordnete Behandlungselemente (31, 32; 31a, 32a bis 31t, 32t) nach mindestens einem der Ansprüche 1 bis 14 ausgebildet sind und
   - die Summe des Kernradius $R_i$ und des Außenradius $R_a$ im Wesentlichen gleich dem Achsabstand a ist.

16. Mehrwellen-Schneckenmaschine nach Anspruch 15, **dadurch gekennzeichnet, dass** die Evoluten $E_j$ der nebeneinander angeordneten Behandlungselemente (31, 32; 31a, 32a bis 31t, 32t) durch lineare Verschiebung in Richtung des Achsabstandes a ineinander überführbar sind.

17. Mehrwellen-Schneckenmaschine nach Anspruch 16, **dadurch gekennzeichnet, dass** die lineare Verschiebung dem Achsabstand a entspricht.

18. Mehrwellen-Schneckenmaschine nach einem der Ansprüche 15 bis 17, **dadurch gekennzeichnet, dass** die Längsachsen M der nebeneinander angeordneten Behandlungselemente (31t, 32t) zu den zugehörigen Drehachsen (9, 10) exzentrisch angeordnet sind.

**Claims**

1. Treatment element for treating material in a multi-shaft worm machine, comprising

   - a longitudinal axis M,
   - a core radius $R_i$ and an outer radius $R_a$ having the longitudinal axis M as the respective centre point,
   - an outer contour $A(\varphi)$ running about the longitudinal axis M, wherein

      -- $\varphi$ is the angle about the longitudinal axis M and
      -- $R_i \leq D_A(\varphi) \leq R_a$ applies to a spacing $D_A(\varphi)$ of the outer contour $A(\varphi)$ from the longitudinal axis M,

   **characterized in that**
   - the outer contour $A(\varphi)$ has at least one outer contour portion $A(\Delta\varphi)$, which runs along an angle portion $\Delta\varphi$,

      -- which has a continuously changing spacing $D_A(\Delta\varphi)$ from the longitudinal axis M, wherein $R_i < D_A(\Delta\varphi) < R_a$, and
      -- which has an associated evolute E,

         --- which is a quantity of n points P(i) where i = 1 to n and $n \geq 3$,
         --- wherein each of the points P(i) lies outside the longitudinal axis M and within the outer radius $R_a$, and
         --- wherein two respective adjacent points P(i) and P(i+1) have the spacing $\Delta r(i)$ from one another, which is less than $R_i/2$.

2. Treatment element according to claim 1, **characterized in that** two respective adjacent points P(i) and P(i+1) have a spacing $\Delta r(i)$ from one another, which is less than $R_i/4$, in particular less than $R_i/6$, and in particular less than $R_i/8$, the two respective adjacent points P(i) and P(i+1) belonging to adjacent involute curves E'(i) and E'(i+1).

3. Treatment element according to claim 1 or 2, **characterized in that** two respective adjacent points P(i) and P(i+1) have a constant spacing $\Delta r$ from one another.

4. Treatment element according to any one of claims 1 to 3, **characterized in that** the involute curves E'(i) belonging to the points P(i) in each case have an angle at centre $\Delta\varepsilon(i)$, which is less than 60°, in particular less than 45°, and in particular less than 30°.

5. Treatment element according to any one of claims 1 to 4, **characterized in that** the involute curves E'(i) belonging to the points P(i) have constant angles at centre $\Delta\varepsilon$.

6. Treatment element according to any one of claims 1 to 5, **characterized in that** the points P(i) lie on a continuous and differentiable curve, which has a direction of curvature that remains the same.

7. Treatment element according to claim 6, **characterized in that** the evolute E is equal to the curve, at least in portions.

8. Treatment element according to any one of claims 1 to 7, **characterized in that** the at least one outer contour portion $A(\Delta\varphi)$ is curved over the entire angle portion $\Delta\varphi$.

9. Treatment element according to any one of claims 1 to 8, **characterized in that** the outer contour $A(\varphi)$ has at least two outer contour portions $A(\varphi_1)$ and $A(\varphi_2)$, and in particular at least four outer contour portions $A(\varphi_1)$ to $A(\varphi_4)$.

10. Treatment element according to any one of claims 1 to 9, **characterized in that** the outer contour $A(\varphi)$ has at least two outer contour portions $A(\Delta\varphi_j)$ and $A(\Delta\varphi_{j+1})$, which have a common evolute $E_j$.

11. Treatment element according to any one of claims 1 to 9, **characterized in that** the outer contour $A(\varphi)$ has at least two outer contour portions $A(\Delta\varphi_j)$ and $A(\Delta\varphi_{j+1})$ and the at least two associated evolutes $E_j$ and $E_{j+1}$ are different.

12. Treatment element according to any one of claims 1 to 11, **characterized in that** the outer contour $A(\varphi)$ has at least two outer contour portions $A(\Delta\varphi_j)$ and $A(\Delta\varphi_{j+1})$ and the at least two associated evolutes $E_j$ and $E_{j+1}$ have a common tangent (T).

13. Treatment element according to any one of claims 1 to 12, **characterized in that** the outer contour $A(\varphi)$ has a uniform direction of curvature.

14. Treatment element according to any one of claims 1 to 13, **characterized in that** the outer contour $A(\varphi)$ is multi-threaded, in particular two-threaded.

15. Multi-shaft worm machine with

- a housing (2),
- at least two housing bores (7, 8), which penetrate one another and are parallel to one another,
- at least two shafts (13, 14) arranged concentrically in the housing bores (7, 8),

-- which are rotatably drivable about associated rotational axes (9, 10), in particular are rotatably drivable in the same direction, and
-- which have an axial spacing a of the rotational axes (9, 10),

- a plurality of treatment elements (27 to 34) for treating material,

-- which are non-rotatably arranged one behind the other in an axial direction on the at least two shafts (13, 14), and
-- which are configured to tightly mesh with one another,
**characterized in that**

- at least two treatment elements (31, 32; 31a, 32a to 31t, 32t) arranged directly next to one another are configured according to at least any one of claims 1 to 14 and
- the sum of the core radius $R_i$ and the outer radius $R_a$ substantially equals the axial spacing a.

16. Multi-shaft worm machine according to claim 15, **characterized in that** the evolutes $E_j$ of the treatment elements (31, 32; 31a, 32a to 31t, 32t) arranged next to one another are movable into one another by linear displacement in the direction of the axial spacing a.

17. Multi-shaft worm machine according to claim 16, **characterized in that** the linear displacement corresponds to the axial spacing a.

18. Multi-shaft worm machine according to any one of claims 15 to 17, **characterized in that** the longitudinal axes M of the treatment elements (31t, 32t) arranged next to one another are arranged eccentrically with respect to the associated rotational axes (9, 10).

**Revendications**

1. Elément de mélange destiné au traitement de matières dans une machine à vis multiples comprenant

- un rayon de coeur $R_i$ et un rayon externe $R_a$, respectivement, présentant en tant que centre l'axe longitudinal M,
- un contour externe $A(\varphi)$ se déroulant autour de l'axe longitudinal M,

-- $\varphi$ étant l'angle autour de l'axe longitudinal M, et
-- $R_i \leq D_A(\varphi) \leq R_a$ étant la relation valable pour une distance $D_A(\varphi)$ du contour externe $A(\varphi)$ par rapport à l'axe longitudinal M,

**caractérisé en ce que**
- le contour externe $A(\varphi)$ présente au moins une segment de contour externe $A(\Delta\varphi)$ s'étendant le long d'un secteur angulaire $\Delta\varphi$,

-- qui est à une distance $D_A(\Delta\varphi)$ variant continuellement par rapport à l'axe longitudinal M, où l'on a la relation $Ri < D_A(\Delta\varphi) < R_a$, et
-- qui présente une développée E correspondante,

--- qui est constituée d'une quantité de n points $P(i)$ avec $i = 1$ jusqu'à n et $n \geq 3$,
--- chacun des points $P(i)$ se situant à l'extérieur de l'axe longitudinal M et à l'intérieur du rayon externe $R_a$, et
--- deux points respectivement voisins $p(i)$ et $P(i + 1)$ présentant entre eux une distance $\Delta r(i)$ qui est inférieure à $R_i/2$.

2. Elément de mélange selon la revendication 1, **caractérisé en ce que** deux points $P(i)$ et $P(i + 1)$ respectivement voisins présentent une distance $\Delta r(i)$ l'un par rapport à l'autre qui est inférieure à $R_i/4$, en particulier, inférieure à $R_i/6$, et tout particulièrement inférieure à $R_i/8$, les deux points $P(i)$ et $P(i + 1)$ respectivement voisins appartenant à des courbes développantes $E'(i)$ et $E'(i + 1)$ voisines.

3. Elément de mélange selon les revendications 1 ou 2, **caractérisé en ce que** deux points $P(i)$ et $P(i + 1)$ respectivement voisins présentent une distance $\Delta r$ constante entre eux.

4. Elément de mélange selon l'une des revendications 1 à 3, **caractérisé en ce que** les points $P(i)$ appartenant à la courbe développante $E'(i)$ présentent respectivement un angle au centre $\Delta\varepsilon(i)$ qui est inférieur à 60 °, en particulier, inférieur à 45 °, et tout particulièrement inférieur à 30 °.

5. Elément de mélange selon l'une des revendications 1 à 4, **caractérisé en ce que** les courbes développantes $E'(i)$ correspondant aux points $P(i)$ présentent des angles au centre $\Delta\varepsilon$ constants.

6. Elément de mélange selon l'une des revendications 1 à 5, **caractérisé en ce que** les points $P(i)$ se situent sur une courbe constante et dérivable qui présente une direction de courbure restant égale.

7. Elément de mélange selon la revendication 6, **caractérisé en ce que** la développée E est au moins partiellement égale à la courbe.

8. Elément de mélange selon l'une des revendications 1 à 7, **caractérisé en ce qu'**au moins un segment de contour externe $A(\Delta\varphi)$ est courbe sur le secteur angulaire $\Delta\varphi$ total.

9. Elément de mélange selon l'une des revendications 1 à 8, **caractérisé en ce que** le contour externe $A(\varphi)$ présente au moins deux segments de contour externe $A(\varphi_1)$ et $A(\varphi_2)$, et, en particulier, au moins quatre segments de contour externe $A(\varphi_1)$ à $A(\varphi_4)$.

10. Elément de mélange selon l'une des revendications 1 à 9, **caractérisé en ce que** le contour externe $A(\varphi)$ présente au moins deux segments de contour externe $A(\varphi_j)$ et $A(\varphi_{j+1})$ qui ont une développée $E_j$ commune.

11. Elément de mélange selon l'une des revendications 1 à 9, **caractérisé en ce que** le contour externe $A(\varphi)$ présente au moins deux segments de contour externe $A(\varphi_j)$ et $A(\varphi_{j+1})$ et que les au moins développées $E_j$ et $E_{j+1}$ correspondantes sont différentes.

12. Elément de mélange selon l'une des revendications 1 à 11, **caractérisée en ce que** le contour externe $A(\varphi)$ présente au moins deux segments de contour externe $A(\Delta\varphi_j)$ et $A(\Delta\varphi_{j+1})$ et que les deux au moins développées $E_j$ et $E_{j+1}$ correspondantes ont une tangente (T) commune.

13. Elément de mélange selon l'une des revendications 1 à 13, **caractérisé en ce que** le contour externe $A(\varphi)$ présente une direction de courbure homogène.

14. Elément de mélange selon l'une des revendications 1 à 13, **caractérisé en ce que** le contour externe $A(\varphi)$ est conçu sous la forme de plusieurs pas, en particulier, sous forme de deux pas.

15. Machine à vis multiple comprenant

- un carter (2),
- au moins deux alésages (7, 8) de carter parallèles l'un à l'autre, l'un traversant l'autre,
- au moins deux arbres (13, 14) disposés de manière concentrique dans les alésages (7, 8) de carter,

-- qui peuvent être entraînés en rotation, en particulier, peuvent être entraînés en rotation dans le même sens, autour des axes (9, 10) de rotation correspondants, et

-- présentent une distance entre les axes a pour les axes (9, 10) de rotation,

- plusieurs éléments de mélange (27 à 34) destinés au traitement de matières,

-- qui sont disposés les uns derrière les autres, en ne pouvant pas tourner, dans une direction axiale, sur au moins deux arbres (13, 14) et

-- qui sont conçus pour être très rapprochés les uns des autres,

**caractérisée en ce que**
- au moins deux éléments de mélange (31, 32 ; 31a, 32a jusqu'à 31t, 32t) disposés immédiatement l'un à côté de l'autre, sont réalisés selon au moins l'une des revendications 1 à 14, et
- la somme des rayons de coeur $R_i$ et des rayons externes $R_a$ est dans l'ensemble égale à la distance entre les axes a.

16. Machine à vis multiple selon la revendication 15, **caractérisée en ce que** les développées $E_j$ des éléments de mélange (31, 32 ; 31a, 32a jusqu'à 31t, 32t) disposés les uns à côté des autres, peuvent être converties l'une en l'autre par un déplacement linéaire dans la direction de la distance entre les axes a.

17. Machine à vis multiple selon la revendication 16, **caractérisée en ce que** le déplacement linéaire correspond à la distance entre les axes a.

18. Machine à vis multiple selon l'une des revendications 15 à 17, **caractérisée en ce que** les axes longitudinaux M des éléments de mélange (31t, 32t) disposés les uns à côté des autres, sont disposés de manière excentrique par rapport aux axes (9, 10) de rotation correspondants.

Fig. 1

Fig. 2

Fig. 3

Fig. 4

EP 2 483 051 B1

Fig. 5

EP 2 483 051 B1

Fig. 6

Fig. 7

Fig. 8

Fig. 9

EP 2 483 051 B1

Fig. 10

$A_1(\Delta\varphi_{F21})=A_1(\Delta\varphi_{21})$

$A_2(\Delta\varphi_{F12})=A_2(\Delta\varphi_{12})$

$A_2(\varphi)$

$M_{T1}$

$A_2(\Delta\varphi_{K2})$

$M_{T2}$

$A_1(\Delta\varphi_{K1})$

$E_1$

M

$\varphi$

$R_i$   $R_a$

$A_2(\Delta\varphi_{G2})$

$A_1(\Delta\varphi_{G1})$

$A_2(\Delta\varphi_{T2})$

$A_1(\Delta\varphi_{T1})$

$A_2(\Delta\varphi_{F22})$

$A_1(\Delta\varphi_{F11})$

$P_1(3)$

$P_1(2)$

$P_1(1)$

$E_2$

$A_2(\Delta\varphi_{22})$

$A_1(\varphi)$

$A_1(\Delta\varphi_{11})$

$P_2(1)$

$P_2(2)$

$P_2(3)$

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

EP 2 483 051 B1

Fig. 24

Fig. 25

Fig. 26

Fig. 27

Fig. 28

Fig. 29

Fig. 30

Fig. 31

Fig. 32

Fig. 33

Fig. 34

Fig. 35

EP 2 483 051 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1180718 A
- WO 9533608 A1
- EP 1093905 A2
- WO 02076707 A1
- DE 2526894 A1
- EP 1013402 A2
- EP 0715882 A2